# EUROPEAN PATENT APPLICATION

(11) **EP 4 644 164 A1**
(43) Date of publication of application: **05.11.2025**
(21) Application number: 23910721.2
(22) Date of filing: 27.12.2023
(51) Int. Cl.: B60L 53/00, B60L 58/12

(54) **DISCHARGE CONTROL METHOD, APPARATUS AND SYSTEM, AND VEHICLE**

(30) Priority: 31.12.2022 CN 202211739325
(71) Applicant: Shenzhen Yinwang Intelligent Technologies Co., Ltd., Shenzhen, Guangdong 518110 (CN)
(72) Inventor: ZHANG, Yumei, Shenzhen, Guangdong 518129 (CN); WU, Haolin, Shenzhen, Guangdong 518129 (CN); HUANG, Xingdi, Shenzhen, Guangdong 518129 (CN)
(74) Representative: Thun, Clemens
(86) International application number: PCT/CN2023/142347
(87) International publication number: WO 2024/140802

(57) **Abstract**

A discharging control method is disclosed, including: when a vehicle is connected to a discharging connector and a connection confirmation signal of the discharging connector is valid, obtaining first running data of the vehicle; and determining a discharging detection result of the vehicle based on the first running data, and sending a first signal to a battery management system of the vehicle when the discharging detection result indicates that discharging is allowed for the vehicle, where the first signal indicates that discharging is allowed; or obtaining second running data of a vehicle in a process in which a power battery of the vehicle discharges through a discharging connector; and determining a discharging stop detection result of the vehicle based on the second running data, and sending a second signal to a battery management system of the vehicle when the discharging stop detection result indicates that discharging is prohibited for the vehicle, where the second signal indicates that discharging is prohibited. This method can improve a safety coefficient in a discharging process of the vehicle and ensure safety of a person and a component. A discharging control apparatus, a discharging control system, a vehicle, a computer-readable storage medium, and a computer storage product are further disclosed.

## Description

### CROSS-REFERENCE TO RELATED APPLICATIONS

This application claims priority to Chinese Patent Application No. 202211739325.2, filed with the China National Intellectual Property Administration on December 31, 2022 and entitled "DISCHARGING CONTROL METHOD, APPARATUS, AND SYSTEM, AND VEHICLE", which is incorporated herein by reference in its entirety.

### TECHNICAL FIELD

This application relates to the field of machinery and electronics technologies, and in particular, to a discharging control method, apparatus, and system, and a vehicle.

### BACKGROUND

With development of technologies in the field of new energy, application of new energy vehicles, for example, electric cars/electric vehicles (electric vehicles), is increasingly popular. The new energy vehicle may work in a vehicle-to-everything information exchange mode. The mode includes but is not limited to a vehicle-to-load mode, a vehicle-to-vehicle mode, a vehicle-to-grid mode, and the like. The vehicle-to-load mode provides electric energy for instant outdoor electricity use. The vehicle-to-vehicle mode provides emergency electricity for another electric vehicle. The vehicle-to-grid mode is a mode in which pressure on an electric vehicle is alleviated and a power grid is stabilized during peak electricity use.

In a charging process of the new energy vehicle, a charging connector is inserted into a charging port of the new energy vehicle for a charging connection. Because the new energy vehicle has an increasingly high requirement on an endurance range, and a capacity of a power battery is also increasingly large, an electronic lock usually needs to be disposed in the charging process of the new energy vehicle. The electronic lock may implement information association between the charging connector and a vehicle status, anti-theft, anti-accidental disconnection, and the like, to avoid a case in which injuries or component damage is caused because the charging connector is drawn by mistake.

During actual use, a discharging power in a discharging process of the new energy vehicle is also very high, but there are few protection solutions for the new energy vehicle in the discharging process at present.

### SUMMARY

This application provides a discharging control method, apparatus, and system, and a vehicle, to improve a safety coefficient in a discharging process of the vehicle and ensure safety of a component and a person.

According to a first aspect, embodiments of this application provide a discharging control method. The method is applied to the foregoing provided vehicle, and is performed by a controller in the vehicle. Specifically, the method includes the following steps:
when a vehicle is connected to a discharging connector and a connection confirmation signal of the discharging connector is valid, obtaining first running data of the vehicle; and determining a discharging detection result of the vehicle based on the first running data, and sending a first signal to a battery management system of the vehicle when the discharging detection result indicates that discharging is allowed for the vehicle, where the first signal indicates that discharging is allowed; or obtaining second running data of a vehicle in a process in which a power battery of the vehicle discharges through a discharging connector; and determining a discharging stop detection result of the vehicle, and sending a second signal to a battery management system of the vehicle when the discharging stop detection result indicates that discharging is prohibited for the vehicle, where the second signal indicates that discharging is prohibited.

According to the foregoing method, when the vehicle is connected to the discharging connector, a discharging path between the vehicle and the discharging connector is formed. When it is detected that the connection confirmation signal is valid, it is determined that a device connected to the discharging connector is an electrical load, and whether a current vehicle condition meets a discharging condition may be determined based on the first running data. In addition, when the vehicle meets the discharging condition, the first signal may be sent to the battery management system in the vehicle. That is, discharging detection of the vehicle is completed before the BMS controls the power battery to perform a discharge operation and controls the electronic lock to be locked. In this way, discharging protection of the vehicle is implemented.

In a possible implementation, the first running data includes one or more of the following: a state of charge of the power battery, a running mode of the vehicle, or a discharging status of the vehicle.

In a possible implementation, the determining a discharging detection result of the vehicle based on the first running data includes: when the state of charge of the power battery is greater than a minimum discharging threshold; when the running mode of the vehicle is a target mode, and the target mode is a mode other than a fault mode, a detection mode, a maintenance mode, and a trailer mode; or when no fault that stops discharging occurs in the vehicle, determining that the discharging detection result indicates that discharging is allowed for the vehicle.

According to the foregoing method, when the vehicle is in a non-moving or overhaul mode, and no discharging fault occurs in the vehicle, if the remaining capacity of the power battery of the vehicle is sufficient, the vehicle may be controlled to output redundant electric energy to an external device. When the remaining capacity of the power battery in the vehicle is insufficient, the vehicle is prohibited from outputting electric energy to an external device, thereby ensuring normal running of the vehicle.

In a possible implementation, the second running data includes one or more of the following: the state of charge of the power battery, the discharging status of the vehicle, the connection confirmation signal, a discharging status of the power battery, and discharging duration of the power battery.

In a possible implementation, determining the discharging stop detection result of the vehicle based on the second running data includes: when the state of charge of the power battery is less than the minimum discharging threshold; when the fault that stops discharging occurs in the vehicle; when the connection confirmation signal is invalid; when a third signal sent by the battery management system is received, and the third signal indicates that discharging is prohibited; or when the discharging duration of the power battery exceeds preset discharging duration, determining that the discharging stop detection result indicates that discharging is prohibited for the vehicle.

According to the foregoing method, in the process in which the power battery in the vehicle discharges through the discharging connector, if the remaining capacity of the power battery of the vehicle is insufficient, a connection failure occurs, or a component in the vehicle is faulty, escalation of a fault or impact on normal running of the vehicle may be avoided, the power battery may be controlled to be prohibited from discharging, and the vehicle may be disconnected from the discharging connector through unlocking of the electronic lock.

In a possible implementation, when it is determined that a vehicle-mounted terminal receives a discharging instruction sent by a terminal device, the vehicle is connected to the discharging connector, and the connection confirmation signal of the discharging connector is valid, third running data of the vehicle is obtained. The discharging detection result is determined based on the third running data, and the first signal is sent to the battery management system when the discharging detection result indicates that discharging is allowed for the vehicle.

According to the foregoing method, when a user is far away from the vehicle, the user may perform discharging control on the vehicle by using the terminal device, thereby improving user experience.

In a possible implementation, the method further includes: when determining that the vehicle-mounted terminal receives a discharging prohibition instruction sent by the terminal device, sending the second signal to the battery management system.

According to the foregoing method, when the user is far away from the vehicle, the user may control, by using the terminal device, the vehicle to end discharging, thereby improving user experience.

In a possible implementation, the method further includes: when receiving a first fault signal that indicates an unlocking failure of the electronic lock and that is sent by a drive unit, directly driving the electronic lock for emergency unlocking, where the drive unit is configured to drive the electronic lock to be locked or unlocked.

According to the foregoing method, in normal cases, the drive unit drives the electronic lock to be locked or unlocked. If the drive unit cannot drive the electronic lock to be unlocked normally, a control component in the vehicle may perform emergency unlocking processing.

In a possible implementation, that the first signal indicates that discharging is allowed includes: The first signal indicates that discharging is allowed and that the electronic lock is allowed to be locked. That the second signal indicates that discharging is prohibited includes: The second signal indicates that discharging is prohibited and that the electronic lock is allowed to be unlocked.

According to a second aspect, embodiments of this application provide a discharging control method. The discharging control method includes the following steps: when a vehicle is connected to a discharging connector, a connection confirmation signal of the discharging connector is valid, and a first signal sent by a controller of the vehicle is received, controlling a drive unit to drive an electronic lock to be locked, and controlling a power battery of the vehicle to output electric energy to the discharging connector, where the first signal indicates that discharging is allowed; or in a process in which a power battery discharges through a discharging connector, when a second signal sent by a controller is received, controlling the power battery to stop discharging, and controlling a drive unit to drive an electronic lock to be unlocked, where the second signal indicates that discharging is prohibited.

According to the foregoing method, when the vehicle is connected to the discharging connector, a discharging path between the vehicle and the discharging connector is formed. When it is detected that the connection confirmation signal is valid, and the first signal sent by the controller is received, it may be determined that the vehicle currently meets a discharging condition, and a discharging operation may be performed after the electronic lock is controlled to be locked. Similarly, in the process in which the power battery discharges through the discharging connector, if the second signal sent by the controller is received, it may be determined that the vehicle currently does not meet a discharging condition, the power battery may be controlled to stop discharging, and unlocking is performed. It can be learned from the foregoing description that, in the discharging process of the power battery, the electronic lock is in a locked state, so that a case in which injuries or component damage is caused because the discharging connector is accidentally disconnected from the vehicle in the discharging process can be effectively avoided, thereby improving a safety coefficient in a discharging process of the vehicle.

In a possible implementation, the method further includes: after controlling the drive unit to drive the electronic lock to be locked, detecting a status of the electronic lock; and when determining that the electronic lock fails to be locked, controlling the power battery to stop discharging, and sending, to the controller, a first fault signal that indicates a locking failure of the electronic lock.

According to the foregoing method, when the electronic lock fails to be locked, the electronic lock cannot provide safety protection, and the vehicle may stop performing a discharging operation.

In a possible implementation, the method further includes: receiving the connection confirmation signal sent by the drive unit.

According to the foregoing method, when the discharging connector is connected to the vehicle, the drive unit receives the connection confirmation signal sent by the discharging connector, and the drive unit may determine a connected device based on the connection confirmation signal. Therefore, whether the currently connected device is a load may be determined by using the drive unit.

In a possible implementation, the method further includes: detecting the status of the electronic lock in the process in which the power battery discharges through the discharging connector; and when determining that the electronic lock is unlocked, controlling a discharging current of the power battery to be less than a preset current, where the preset current is less than or equal to a rated current of a load connected to the discharging connector.

According to the foregoing method, in the discharging process of the power battery, if the user operates the electronic lock to perform unlocking processing, to ensure safety in the discharging process of the vehicle, the discharging current of the power battery may be reduced.

In a possible implementation, the method further includes: in the process in which the power battery discharges through the discharging connector, when receiving a second fault signal that indicates a fault of the drive unit and that is sent by the drive unit, controlling the power battery to stop discharging, and controlling the drive unit to drive the electronic lock to be unlocked.

According to the foregoing method, when another fault occurs in the drive unit, to avoid that the fault affects normal running of the vehicle and the discharging connector, the vehicle may be controlled to end a discharge operation, and the vehicle may be disconnected from the discharging connector through unlocking of the electronic lock.

In a possible implementation, the method further includes: in the process in which the power battery discharges through the discharging connector, detecting a fault status of the power battery, and when determining that a fault that prohibits discharging occurs in the power battery, controlling the power battery to stop discharging, and controlling the drive unit to drive the electronic lock to be unlocked.

According to the foregoing method, when the power battery is faulty, to avoid escalation of a fault of the power battery, the vehicle may be controlled to end a discharging operation, and the vehicle may be disconnected from the discharging connector through unlocking of the electronic lock.

In a possible implementation, the method further includes: after controlling the drive unit to drive the electronic lock to be unlocked, controlling the drive unit to detect the status of the electronic lock; and when receiving a third fault signal that indicates an unlocking failure of the electronic lock and that is sent by the drive unit, directly driving the electronic lock for emergency unlocking.

According to the foregoing method, in normal cases, the drive unit drives the electronic lock to be locked or unlocked. If the drive unit cannot drive the electronic lock to be unlocked normally, a control component in the vehicle may perform emergency unlocking processing.

In a possible implementation, the method further includes: when determining that a vehicle-mounted terminal receives an emergency unlocking instruction sent by a terminal device, directly driving the electronic lock for emergency unlocking.

According to the foregoing method, in normal cases, the drive unit drives the electronic lock to be locked or unlocked. If the drive unit cannot drive the electronic lock to be unlocked normally, the user may perform emergency unlocking by operating the terminal device.

According to a third aspect, embodiments of this application provide a discharging control method. The discharging control method includes the following steps:
when a vehicle is connected to a discharging connector and a connection confirmation signal of the discharging connector is valid, obtaining first running data of the vehicle; and determining a discharging detection result of the vehicle based on the first running data; and when the discharging detection result indicates that discharging is allowed for the vehicle, controlling a drive unit to drive an electronic lock to be locked, and controlling a power battery in the vehicle to output electric energy to the discharging connector, where the drive unit is configured to drive the electronic lock to be locked or unlocked; or obtaining second running data of a vehicle in a process in which a power battery discharges through a discharging connector; and determining a discharging stop detection result of the vehicle based on the second running data; and when the discharging stop detection result indicates that discharging is prohibited for the vehicle, controlling the power battery to stop discharging, and controlling a drive unit to drive an electronic lock to be unlocked.

According to the foregoing method, when the vehicle is connected to the discharging connector, a discharging path between the vehicle and a device connected to the discharging connector is formed. When it is detected that the connection confirmation signal of the discharging connector is valid, it is determined that the device connected to the discharging connector is a load. In this case, a vehicle connection status meets a discharging condition. A current running status of the vehicle can be monitored, and whether the vehicle currently meets a discharging requirement can be determined. When the vehicle currently meets the discharging requirement, the electronic lock is controlled to be locked, and the power battery controlled to discharge, to enter a vehicle discharging procedure. Similarly, in the discharging process, a controller may monitor a current running status of the vehicle, determine whether the vehicle currently meets a discharging stop procedure, and when determining that discharging is prohibited for the vehicle, control the power battery to stop discharging and control the electronic lock to be unlocked, to end discharging of the vehicle. By using the foregoing solution, the electronic lock is controlled to be locked before the vehicle discharges and in the discharging process, so that a case in which injuries or component damage is caused because the discharging connector is accidentally disconnected from a discharging port in the discharging process can be effectively avoided, thereby improving a safety coefficient in the discharging process of the vehicle.

In a possible implementation, the method further includes: obtaining third running data of the vehicle when determining that a vehicle-mounted terminal receives a discharging instruction sent by a terminal device, the vehicle is connected to the discharging connector, and the connection confirmation signal of the discharging connector is valid; and determining the discharging detection result based on the third running data, and when the discharging detection result indicates that discharging is allowed for the vehicle, controlling the drive unit to drive the electronic lock to be locked.

According to the foregoing method, when a user is far away from the vehicle, the user may perform discharging control on the vehicle by using the terminal device, thereby improving user experience.

In a possible implementation, the method further includes: when determining that the vehicle-mounted terminal receives a discharging prohibition instruction sent by the terminal device, controlling the drive unit to drive the electronic lock to be unlocked.

According to the foregoing method, when the user is far away from the vehicle, the user may control, by using the terminal device, the vehicle to end discharging, thereby improving user experience.

In a possible implementation, the method further includes: when receiving a first fault signal that indicates an unlocking failure of the electronic lock and that is sent by the drive unit, directly driving the electronic lock for emergency unlocking.

According to the foregoing method, in normal cases, the drive unit drives the electronic lock to be locked or unlocked. If the drive unit cannot drive the electronic lock to be unlocked normally, a control component in the vehicle may perform emergency unlocking processing.

In a possible implementation, the method further includes: when determining that the vehicle-mounted terminal receives an emergency unlocking instruction sent by the terminal device, directly driving the electronic lock for emergency unlocking.

According to the foregoing method, in normal cases, the drive unit drives the electronic lock to be locked or unlocked. If the drive unit cannot drive the electronic lock to be unlocked normally, the user may perform emergency unlocking by operating the terminal device.

According to a fourth aspect, embodiments of this application provide a discharging control apparatus. The discharging control apparatus includes at least one processor. The at least one processor is coupled to at least one memory. The at least one processor includes a transceiver unit and a processing unit. The transceiver unit is configured to: when a vehicle is connected to a discharging connector and a connection confirmation signal of the discharging connector is valid, obtain first running data of the vehicle. The processing unit is configured to: determine a discharging detection result of the vehicle based on the first running data, and send a first signal to a battery management system of the vehicle by using the transceiver unit when the discharging detection result indicates that discharging is allowed for the vehicle, where the first signal indicates that discharging is allowed. The transceiver unit is further configured to: obtain second running data of the vehicle in a process in which a power battery of the vehicle discharges through the discharging connector. The processing unit is configured to: determine a discharging stop detection result of the vehicle based on the second running data, and send a second signal to a battery management system of the vehicle by using the transceiver unit when the discharging stop detection result indicates that discharging is prohibited for the vehicle, where the second signal indicates that discharging is prohibited.

In a possible implementation, the first running data includes one or more of the following: a state of charge of the power battery, a running mode of the vehicle, or a discharging status of the vehicle.

In a possible implementation, the processing unit is specifically configured to: when the state of charge of the power battery is greater than a minimum discharging threshold; when the running mode of the vehicle is a target mode, and the target mode is a mode other than a fault mode, a detection mode, a maintenance mode, and a trailer mode; or when no fault that stops discharging occurs in the vehicle, determine that the discharging detection result indicates that discharging is allowed for the vehicle.

In a possible implementation, the second running data includes one or more of the following: the state of charge of the power battery, the discharging status of the vehicle, the connection confirmation signal, a discharging status of the power battery, and discharging duration of the power battery.

In a possible implementation, the processing unit is specifically configured to: when the state of charge of the power battery is less than the minimum discharging threshold; when the fault that stops discharging occurs in the vehicle; when the connection confirmation signal is invalid; when a third signal sent by the battery management system is received, and the third signal indicates that discharging is prohibited; or when the discharging duration of the power battery exceeds preset discharging duration, determine that the discharging stop detection result indicates that discharging is prohibited for the vehicle.

In a possible implementation, the processing unit is further configured to: obtain third running data of the vehicle by using the transceiver unit when determining that a vehicle-mounted terminal receives a discharging instruction sent by a terminal device, the vehicle is connected to the discharging connector, and the connection confirmation signal of the discharging connector is valid; and determine the discharging detection result based on the third running data, and send the first signal to the battery management system by using the transceiver unit when the discharging detection result indicates that discharging is allowed for the vehicle.

In a possible implementation, the processing unit is further configured to: when determining that the vehicle-mounted terminal receives a discharging prohibition instruction sent by the terminal device, send the second signal to the battery management system by using the transceiver unit.

In a possible implementation, the processing unit is further configured to: when receiving a first fault signal that indicates an unlocking failure of the electronic lock and that is sent by a drive unit, directly drive the electronic lock for emergency unlocking, where the drive unit is configured to drive the electronic lock to be locked or unlocked.

In a possible implementation, the processing unit is further configured to: when determining that the vehicle-mounted terminal receives an emergency unlocking instruction sent by the terminal device, directly drive the electronic lock for emergency unlocking.

In a possible implementation, the processing unit is specifically configured to: send the first signal and the second signal by using the transceiver unit, where the first signal indicates that discharging is allowed and that the electronic lock is allowed to be locked, and the second signal indicates that discharging is prohibited and that the electronic lock is allowed to be unlocked.

According to a fifth aspect, embodiments of this application provide a discharging control apparatus. Embodiments of this application provide a discharging control apparatus. The discharging control apparatus includes at least one processor. The at least one processor is coupled to at least one memory. The at least one processor includes a transceiver unit and a processing unit. The processing unit is configured to: when a vehicle is connected to a discharging connector, a connection confirmation signal of the discharging connector is valid, and it is determined that the transceiver unit receives a first signal sent by a controller of the vehicle, control a drive unit to drive an electronic lock to be locked, and control a power battery of the vehicle to output electric energy to the discharging connector, where the first signal indicates that discharging is allowed; and in a process in which the power battery discharges through the discharging connector, when it is determined that the transceiver unit receives a second signal sent by the controller, control the power battery to stop discharging, and control the drive unit to drive the electronic lock to be unlocked, where the second signal indicates that discharging is prohibited.

In a possible implementation, the processing unit is further configured to: after controlling the drive unit to drive the electronic lock to be locked, detect a status of the electronic lock; and when determining that the electronic lock fails to be locked, control the power battery to stop discharging, and send, to the controller by using the transceiver unit, a first fault signal that indicates a locking failure of the electronic lock.

In a possible implementation, the transceiver unit is further configured to receive the connection confirmation signal sent by the drive unit.

In a possible implementation, the processing unit is further configured to: detect the status of the electronic lock in the process in which the power battery discharges through the discharging connector; and when determining that the electronic lock is unlocked, control a discharging current of the power battery to be less than a preset current, where the preset current is less than or equal to a rated current of a load connected to the discharging connector.

In a possible implementation, the processing unit is further configured to: in the process in which the power battery discharges through the discharging connector, when receiving, by using the transceiver unit, a second fault signal that indicates a fault of the drive unit and that is sent by the drive unit, control the power battery to stop discharging, and control the drive unit to drive the electronic lock to be unlocked.

In a possible implementation, the processing unit is further configured to: in the process in which the power battery discharges through the discharging connector, detect a fault status of the power battery, and when determining that a fault that prohibits discharging occurs in the power battery, control the power battery to stop discharging, and control the drive unit to drive the electronic lock to be unlocked.

In a possible implementation, the processing unit is further configured to: after controlling the drive unit to drive the electronic lock to be unlocked, control the drive unit to detect the status of the electronic lock; and when receiving, by using the transceiver unit, a third fault signal that indicates an unlocking failure of the electronic lock and that is sent by the drive unit, directly drive the electronic lock for emergency unlocking.

In a possible implementation, the processing unit is further configured to: when determining that a vehicle-mounted terminal receives an emergency unlocking instruction sent by a terminal device, directly drive the electronic lock for emergency unlocking.

According to a sixth aspect, embodiments of this application provide a discharging control apparatus. Embodiments of this application provide a discharging control apparatus. The discharging control apparatus includes at least one processor. The at least one processor is coupled to at least one memory. The at least one processor includes a transceiver unit and a processing unit. The transceiver unit is configured to: when a vehicle is connected to a discharging connector and a connection confirmation signal of the discharging connector is valid, obtain first running data of the vehicle. The processing unit is configured to: determine a discharging detection result of the vehicle based on the first running data; and when the discharging detection result indicates that discharging is allowed for the vehicle, control a drive unit to drive an electronic lock to be locked, and control a power battery in the vehicle to output electric energy to the discharging connector, where the drive unit is configured to drive the electronic lock to be locked or unlocked. In addition, the transceiver unit is further configured to: obtain second running data of the vehicle in a process in which the power battery discharges through the discharging connector. The processing unit is further configured to: determine a discharging stop detection result of the vehicle based on the second running data; and when the discharging stop detection result indicates that discharging is prohibited for the vehicle, control the power battery to discharge, and control the drive unit to drive the electronic lock to be unlocked.

In a possible implementation, the transceiver unit is further configured to: obtain third running data of the vehicle when determining that a vehicle-mounted terminal receives a discharging instruction sent by a terminal device, the vehicle is connected to the discharging connector, and the connection confirmation signal of the discharging connector is valid. The processing unit is further configured to: determine the discharging detection result based on the third running data, and when the discharging detection result indicates that discharging is allowed for the vehicle, control the drive unit to drive the electronic lock to be locked.

In a possible implementation, the processing unit is further configured to: when determining that the vehicle-mounted terminal receives a discharging prohibition instruction sent by the terminal device, control the drive unit to drive the electronic lock to be unlocked.

In a possible implementation, the processing unit is further configured to: when determining that the transceiver unit receives a first fault signal that indicates an unlocking failure of the electronic lock and that is sent by the drive unit, directly drive the electronic lock for emergency unlocking.

In a possible implementation, the processing unit is further configured to: when determining that the vehicle-mounted terminal receives an emergency unlocking instruction sent by the terminal device, directly drive the electronic lock for emergency unlocking.

According to a seventh aspect, embodiments of this application provide a discharging control system. The discharging control system includes a first execution unit and a second execution unit. The first execution unit is configured to perform the method according to any one of the first aspect or the possible designs of the first aspect, and the second execution unit is configured to perform the method according to any one of the second aspect or the possible designs of the second aspect.

According to an eighth aspect, embodiments of this application provide a vehicle. The vehicle includes a power battery and the discharging control apparatus according to any one of the first aspect and the possible designs of the first aspect or the discharging control apparatus that performs any one of the second aspect and the possible designs of the second aspect.

According to a ninth aspect, embodiments of this application provide a computer-readable storage medium. The storage medium includes a computer program or instructions. When a computer reads and executes the computer program or the instructions, the computer is enabled to perform the method according to any one of the first aspect or the possible designs of the first aspect, or perform the method according to any one of the second aspect or the possible designs of the second aspect, or perform the method according to any one of the third aspect or the possible designs of the third aspect.

According to a tenth aspect, embodiments of this application provide a computer storage product. When the computer program product is run on a computer, the computer is enabled to perform the method according to any one of the first aspect or the possible designs of the first aspect, or perform the method according to any one of the second aspect or the possible designs of the second aspect, or perform the method according to any one of the third aspect or the possible designs of the third aspect.

For details of beneficial effect of the fourth aspect to the tenth aspect, refer to technical effect that can be achieved by corresponding designs in the first aspect to the third aspect. Details are not described herein again.

### BRIEF DESCRIPTION OF DRAWINGS

FIG. 1 is a diagram 1 of discharging of a vehicle according to an embodiment of this application;
FIG. 2 is a diagram of a principle of a vehicle control method according to an embodiment of this application;
FIG. 3 is a schematic flowchart 1 of a discharging control method according to an embodiment of this application;
FIG. 4 is a diagram of communication of a vehicle according to an embodiment of this application;
FIG. 5 is a schematic flowchart 2 of a discharging control method according to an embodiment of this application;
FIG. 6A and FIG. 6B are a schematic flowchart 3 of a discharging control method according to an embodiment of this application;
FIG. 7A and FIG. 7B are a schematic flowchart 4 of a discharging control method according to an embodiment of this application;
FIG. 8A to FIG. 8C are a schematic flowchart 5 of a discharging control method according to an embodiment of this application;
FIG. 9A and FIG. 9B are a schematic flowchart 6 of a discharging control method according to an embodiment of this application;
FIG. 10 is a schematic flowchart 7 of a discharging control method according to an embodiment of this application;
FIG. 11 is a diagram 1 of a structure of a discharging control apparatus according to an embodiment of this application; and
FIG. 12 is a diagram 2 of a structure of a discharging control apparatus according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely used to explain specific embodiments of this application, but are not intended to limit this application. It is clear that the described embodiments are merely a part rather than all of embodiments of this application. All other embodiments obtained by a person of ordinary skill in the art based on embodiments of this application without creative efforts shall fall within the protection scope of this application.

To make the objectives, technical solutions, and advantages of embodiments of this application clearer, the following describes embodiments of this application in detail with reference to the accompanying drawings. The terms used in the implementations of this application are merely used to explain specific embodiments of this application, but are not intended to limit this application. It is clear that the described embodiments are merely a part rather than all of embodiments of this application. All other embodiments obtained by a person of ordinary skill in the art based on embodiments of this application without creative efforts shall fall within the protection scope of this application.

It should be noted that, in this specification, claims, and the accompanying drawings of this application, the terms "first", "second", and the like are intended to distinguish similar objects but do not necessarily indicate a specific order or sequence. It should be understood that the data termed in such a way are interchangeable in proper circumstances, so that embodiments of this application described herein can be implemented in an order other than the orders illustrated or described herein. Implementations described in the following example embodiments do not represent all implementations consistent with this application. On the contrary, the implementations are merely examples of apparatuses and methods that are described in the appended claims in detail and that are consistent with some aspects of this application.

The following describes some terms in embodiments of this application, to facilitate understanding of a person skilled in the art.
(1) In embodiments of this application, the term "a plurality of" means two or more, and another quantifier is similar to this.
(2) A switching transistor in embodiments of this application may be one or more of a plurality of types of switching transistors, for example, a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) transistor. Details are not listed in embodiments of this application. The switching transistors may be packaged in a single-transistor packaging manner, or may be packaged in a multi-transistor packaging manner. This is not limited in embodiments of this application. Each switching transistor may include a first end, a second end, and a control end, where the control end is configured to control on or off of the switching transistor. When the switching transistor is turned on, a current may be transmitted between the first end and the second end of the switching transistor. When the switching transistor is turned off, a current cannot be transmitted between the first end and the second end of the switching transistor. The MOSFET is used as an example. The control end of the switching transistor is a gate. In this case, the first end of the switching transistor may be a source, and the second end may be a drain; or the first end may be a drain, and the second end may be a source.
(3) In embodiments of this application, a "connection" may be understood as an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, A and B are connected through C. The "connection" in embodiments of this application may alternatively be understood as a wireless connection, to be specific, a connection between two electrical elements may be an electromagnetic connection between the two electrical elements.
(4) Direct current and alternating current. The direct current in embodiments of this application is an electrical form in which electric energy is conducted in a constant direction in a circuit. The conduction direction of the electric energy is also referred to as a phase, and the phase of the direct current may be positive or negative. Electric energy intensity of most direct currents is fixed. In some special direct currents (such as pulse direct currents), electric energy intensity also changes over time. The electric energy intensity is also referred to as a current amplitude. Common direct current power supplies include a dry battery, a battery, a direct current generator, or the like. The alternating current in embodiments of this application is an electrical form in which electric energy is conducted in a direction that changes periodically in a circuit. Electric energy intensity of most alternating currents also changes periodically over time. A periodic change of the alternating current in a conduction direction is defined by a frequency of the alternating current. As the frequency of the alternating current increases, the alternating current can change the conduction direction faster, and as the frequency of the alternating current decreases, the alternating current can change the conduction direction slowly. Common alternating current power supplies include a mains supply, an industrial and agricultural power supply, a residential power supply, and the like.
(5) Connection confirmation (connection confirm, CC) signal: The connection confirmation signal is a functional signal that indicates a connection status of a charging port or a discharging port of a vehicle to a device in an electronic or mechanical manner. A port for transmission of the CC signal is a CC port. According to the Electric Vehicle Conductive Power Supply System Standard, for the vehicle, the vehicle determines a device type and a type of a cable between the device and the vehicle through comparison between resistance values of CC ports.

The following clearly and completely describes the technical solutions in embodiments of this application with reference to the accompanying drawings in embodiments of this application. The solutions provided in embodiments of this application are applied to a device that uses a secondary battery as a power supply. The device includes but is not limited to a transportation means, a robot, an industrial device, a smart factory device, and the like. The transportation means provided in embodiments of this application may include one or more different types of transportation tools or movable objects that are operated or moved on land (for example, a highway, a road, or a railway), on water (for example, a waterway, a river, or an ocean), or in the space. For example, the transportation means may include a vehicle, a bicycle, a motorcycle, a train, a subway, an airplane, a ship, an aircraft, and/or another type of transportation tool or movable object.

The following uses an example in which the transportation means is a vehicle. The vehicle provided in embodiments of this application may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), another new energy vehicle (new energy vehicle, NEV), or the like.

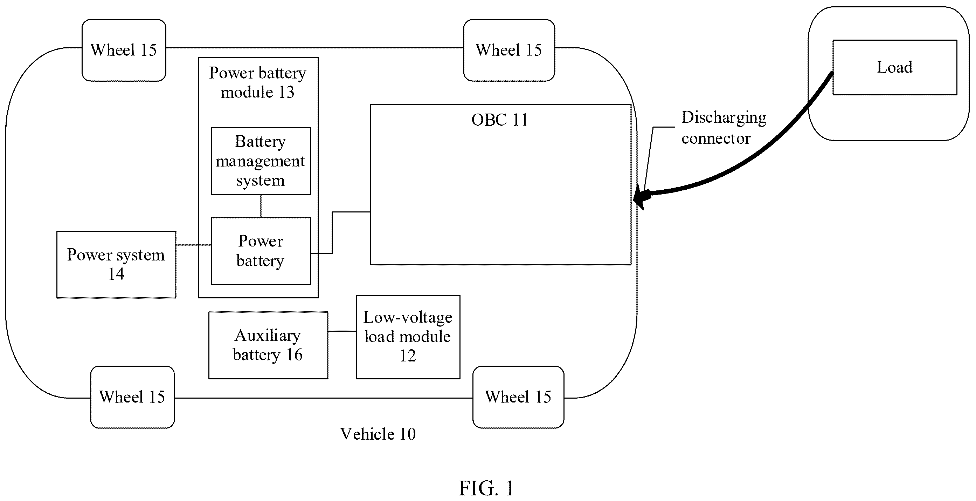

In a specific application scenario, the secondary battery may be used in the vehicle, and is used as a power battery of the vehicle. FIG. 1 is an example of a diagram of a structure of a system of a vehicle. As shown in FIG. 1, the vehicle mainly includes an on-board charger (on-board charger, OBC) 11, at least one low-voltage load module 12, a power battery module 13, a power system 14, a wheel 15, and an auxiliary battery 16.

The power battery module 13 may include a power battery and a battery management system. The battery management system may include a battery management unit, and the battery management unit may manage the power battery. The battery management system may further include a battery detection unit, and the battery detection unit may be configured to detect whether the power battery is faulty. The power battery is a battery with a large capacity and a high power.

The power battery may be a secondary power supply. The secondary battery includes but is not limited to a lithium-ion battery, a sodium-ion battery, a potassium-ion battery, a magnesium-ion battery, a calcium-ion battery, an air battery, a lead-acid battery, a nickel-cadmium battery, and the like. A specific type of the secondary battery is not limited in this application, provided that the secondary battery is a battery that can implement charging and discharging.

The power system 14 may usually include a gear, a bearing, a differential, one or more motors, and the like. When the vehicle travels, the power battery may supply power to the power system 14. The motor in the power system 14 converts received electric energy into mechanical energy, and drives, by using the gear, the bearing, and the differential, the wheel 15 of the vehicle 10 to rotate, to implement movement of the vehicle.

The low-voltage load module 12 may be a functional system or a vehicle-mounted device inside the vehicle 10. In addition, a rated voltage of the low-voltage load module 12 is far lower than a rated voltage of the power battery. Each low-voltage load module 12 may include but is not limited to at least one major load and/or at least one minor load. The major load may be understood as a load that affects traveling of the vehicle, for example, a control system, an autonomous driving system, or a vehicle-mounted navigator. The minor load may be understood as a load that does not affect traveling of the vehicle, for example, a vehicle-mounted radio.

When the vehicle 10 discharges, a load may be usually powered through a discharging connector. As shown in FIG. 1, the discharging connector is connected to the load through a cable. When the discharging connector is inserted into a discharging port of the vehicle, the discharging connector may receive electric energy provided by the power battery in the vehicle, output the electric energy to the load through the cable, and supply power to the load. The load may be a direct-current-powered load, or may be an alternating-current-powered load.

The OBC 11 provides, for the load through the discharging connector, a part of electric energy received from the power battery. In some scenarios, the OBC 11 may further provide the other part of the electric energy of the power battery for the auxiliary battery 16 and the low-voltage load module 12. The auxiliary battery 16 may be a lead-acid battery, a lithium battery, or the like. The auxiliary battery 16 may store the part of electric energy, and the low-voltage load module 12 may work by using the electric energy stored in the auxiliary battery 16.

During actual use, to accelerate a discharging speed, a discharging power of the power battery in the vehicle gradually increases, and a discharging current increases accordingly. In a discharging process of the vehicle, if an operator draws the charging connector by mistake, an electric arc may be generated, causing injuries and component damage. Therefore, safety protection is required in the discharging process of the vehicle. However, there is no corresponding discharging protection solution at present.

In view of this, embodiments of this application first provide a discharging control method, apparatus, and system, and a vehicle. An electronic lock may implement a fixed connection between the vehicle and a discharging connector, a discharging status may be detected by using a control component inside the vehicle, and a status of the electronic lock is controlled based on a detection status, that is, safety protection in a discharging process of the vehicle is implemented by using the electronic lock.

A discharging control solution provided in this application may be applied to the structure of the vehicle shown in FIG. 1. It should be understood that the structure of the vehicle shown in FIG. 1 should not be construed as a limitation on embodiments of this application.

The discharging control method in embodiments of this application may be implemented by a control apparatus in the vehicle. The vehicle control apparatus may be an independent apparatus, or may be a chip or a component in the vehicle 10 shown in FIG. 1, or may be a software module, and may be deployed on a related vehicle-mounted device of the vehicle 10. A product form and a deployment manner of the vehicle control apparatus are not limited in embodiments of this application.

The following describes in detail the discharging control solution that is implemented and provided in this application with reference to embodiments.

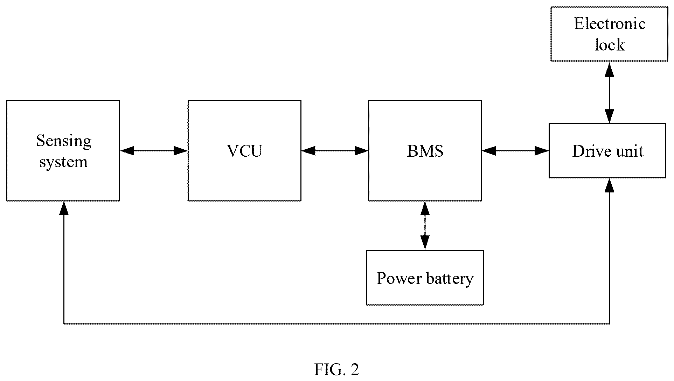

FIG. 2 is a diagram of a principle of a discharging control method according to an embodiment of this application. Refer to FIG. 2. The discharging control solution may be implemented through interaction between a vehicle control unit (vehicle control unit, VCU), a vehicle domain controller (vehicle domain controller, VDC), or a battery management system (battery management system, BMS) and another module in a vehicle.

For example, the VCU may obtain at least one traveling parameter of the vehicle by using a sensing system of the vehicle, and maintain constant monitoring and collecting of running data of the vehicle. The sensing system may include but is not limited to: a speed sensor, an acceleration sensor, an angular velocity sensor, an angle of roll sensor, a steering wheel sensor, and another sensor. The at least one traveling parameter obtained by using the sensing system of the vehicle may include but is not limited to: a driving mode, a road mode, a battery state of charge (state of charge, SOC), a speed, a longitudinal (lateral) acceleration, a yaw angular velocity, an angle of roll, a steering wheel angle, a heading angle, acceleration pedal opening degree information, braking pedal opening degree information, a gear shifter position, the driving mode, the road mode, the battery status of charge (state of charge, SOC), and the like. The VCU may combine various traveling parameters obtained from the sensing system, to obtain information about the vehicle and a surrounding environment. These pieces of information may be used by the VCU for vehicle control decision. For example, the VCU may determine whether the vehicle currently has a discharging safety risk and whether to control the vehicle to enter a discharging procedure, to ensure discharging safety and driving experience of the vehicle.

When controlling the vehicle to enter the discharging procedure, the VCU may deliver a control instruction to the BMS by using an in-vehicle communication network (or a gateway) in the vehicle, so that according to the control instruction from the VCU, the BMS may control a power battery in the vehicle to output, to a discharging connector, stored electric energy, and control a drive unit to drive an electronic lock to be locked, thereby implementing safety protection in the discharging process of the vehicle, and ensuring discharging safety and driving experience of the vehicle.

In a possible implementation, in a process of controlling the vehicle to discharge, the VCU may output, by using the gateway, reminder information to a peripheral device, for example, a touchscreen or a speaker, to indicate a vehicle control decision result to a human driver, so that the human driver learns of a dynamic change of vehicle discharging. The VCU or the VDC may further receive control information from the human driver of the vehicle by using a peripheral device (or by using the gateway), for example, the touchscreen or a microphone. The control information may be associated with the reminder information, and may be used to assist the VCU in vehicle control decision.

In a possible implementation, in a process of controlling the vehicle to discharge, the VCU may output reminder information to a terminal device by using the gateway and a peripheral device, for example, a vehicle-mounted terminal, to indicate a vehicle control decision result to a human driver, so that the human driver learns of a dynamic change of vehicle discharging. The VCU may further receive control information from the terminal device by using the gateway and the peripheral device, for example, the vehicle-mounted terminal. The control information may be associated with the reminder information, and may be used to assist the VCU in vehicle control decision.

It should be noted that, in FIG. 2, bidirectional arrows between different modules only indicate that the modules can communicate with each other, and do not limit any communication manner, information format, and the like. The VCU and the BMS may communicate with different modules in different communication manners or information formats. The VCU and the BMS may further have a protocol conversion function or a format conversion function. This is not limited in embodiments of this application. Other modules in the vehicle shown in FIG. 2 are merely examples. The vehicle may not include some modules shown in FIG. 2, or may include a module other than some modules shown in FIG. 2, or some modules in FIG. 2 are replaced with other modules not shown. Details are not described herein again.

The following describes in detail a discharging control procedure of a vehicle with reference to a VCU and a BMS.

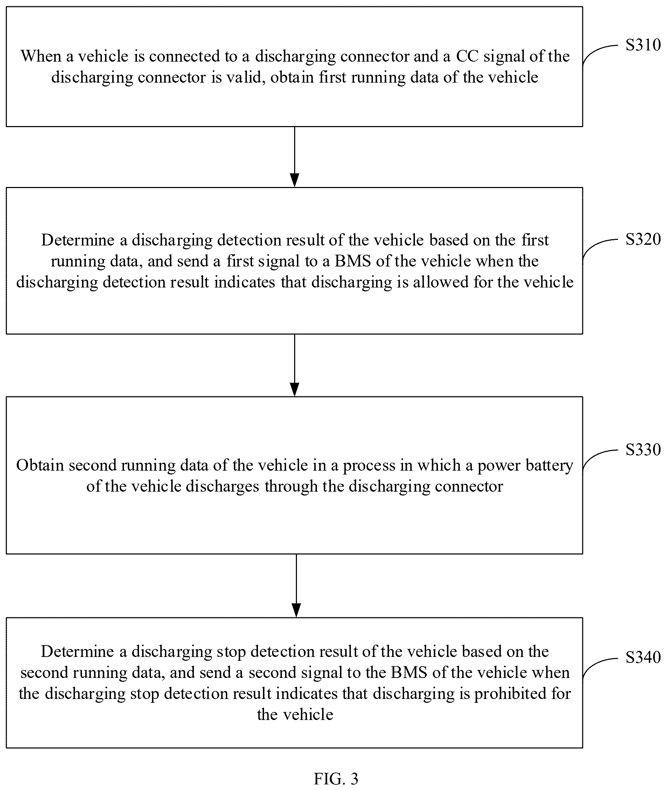

During implementation, when a method is executed by the VCU, refer to FIG. 3. A discharging control method of the vehicle may include the following steps.

S310: When the vehicle is connected to a discharging connector and a CC signal of the discharging connector is valid, obtain first running data of the vehicle.

Specifically, the VCU may interact with a drive unit through a gateway, and obtain CC signal valid information. The drive unit is a component configured to drive an electronic lock to be locked or unlocked, and the drive unit may be but is not limited to an OBC and a vehicle interface unit (vehicle interface unit, VIU).

During actual application, when the discharging connector is inserted into a discharging port of the vehicle, the vehicle is connected to the discharging connector. The drive unit may obtain the CC signal through the discharging connector, and the drive unit may determine validity of the CC signal based on a resistance value of the CC signal of the discharging connector. When the discharging connector is connected to different devices, resistance values of CC signals of the discharging connector are different. When the resistance value of the CC signal is within a load resistance value range specified in the Electric Vehicle Conductive Power Supply System Standard, it is determined that the CC signal is valid. A load may be but is not limited to a direct current charging pile, an alternating current charging pile, another vehicle, or the like.

Usually, the vehicle 20 has two working modes: a charging mode and a discharging mode. Specifically, when a charging connector is inserted into a charging port, the vehicle 20 may work in the charging mode. In this case, the vehicle 20 obtains, through the charging connector, charging electric energy output by a power supply connected to the charging connector, and charges a power battery 22. When the discharging connector is inserted into the discharging port 21, the vehicle 20 may work in the discharge mode. In this case, the vehicle 20 may output, through the discharging connector to a load connected to the discharging connector, electric energy stored in the power battery 22, and supply power to the load connected to the discharging connector.

In an example, the charging port and the discharging port 21 of the vehicle 20 may be a same electric energy interface in the vehicle 20.

S320: Determine a discharging detection result of the vehicle based on the first running data, and send a first signal to the BMS of the vehicle when the discharging detection result indicates that discharging is allowed for the vehicle, where the first signal indicates that discharging is allowed.

In this embodiment of this application, the VCU may maintain constant monitoring of an electronic control unit (electronic control unit, ECU) of the vehicle and a surrounding environment of the vehicle based on various traveling parameters obtained by using a sensing system of the vehicle, and determine a scenario in which the vehicle is located and a discharging control function of the vehicle.

In an example, the first signal indicates that the power battery is allowed to discharge, and also indicates that the electronic lock is allowed to be driven to be locked.

In an example, the first running data includes any one or more of the following: a state of charge of the power battery, a running mode of the vehicle, or a discharging status of the vehicle.

Specifically, when the SOC of the power battery is greater than a minimum discharging threshold; when the running mode of the vehicle is a target mode, and the target mode is a mode other than a fault mode, a detection mode, a maintenance mode, and a trailer mode; or when no fault that stops discharging occurs in the vehicle, it may be determined that the discharging detection result indicates that discharging is allowed for the vehicle. For example, when a gear shifter position of the vehicle is a P gear and the vehicle is in a non-trailer mode, a non-maintenance mode, a non-regular or irregular component detection mode, or the like, if no fault that prohibits discharging occurs in the vehicle, and the remaining capacity of the power battery in the vehicle is sufficient, it may be determined that discharging is allowed for the vehicle. The minimum discharging threshold may be set based on an application scenario of the vehicle.

It should be understood that charging control of the power battery is mainly implemented by the BMS. Before the BMS controls the power battery to discharge, whether discharging is allowed in a current running status of the vehicle needs to be first determined. When the vehicle meets a condition for allowing discharging, the BMS controls the power battery to discharge and drives the electronic lock to be locked. Therefore, in a discharging process of the power battery, the electronic lock is in a locked state, and the discharging connector cannot be inserted or drawn. This can effectively avoid a case in which injuries or component damage is caused because a person draws the discharging connector by mistake, thereby improving a safety coefficient in a discharging process of the vehicle.

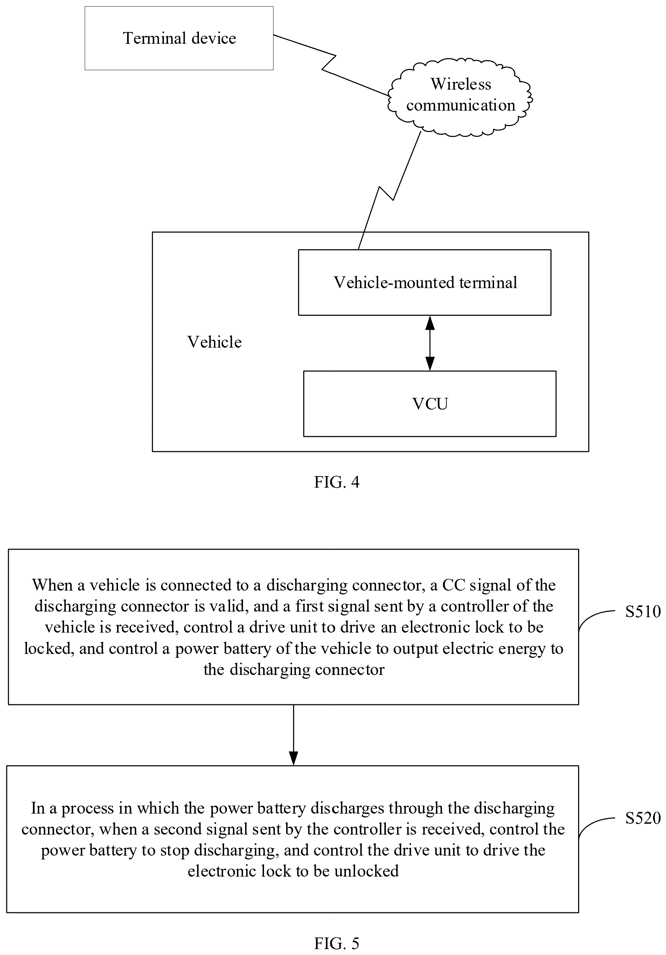

In a possible implementation, refer to FIG. 4. The VCU may interact with a terminal device and a vehicle-mounted terminal through the gateway, and a user may control the discharging process of the vehicle by using the terminal device. The terminal device in embodiments of this application may be a terminal device, for example, a large screen, a mobile phone, a tablet computer, a notebook computer, an augmented reality (augmented reality, AR)/virtual reality (virtual reality, VR) device, or a smart home device (for example, a smart television or a smart screen). It may be understood that a specific type of the terminal device is not limited in embodiments of this application.

Specifically, when it is determined that the vehicle-mounted terminal receives a discharging instruction sent by the terminal device, the vehicle is connected to the discharging connector, and the connection confirmation signal of the discharging connector is valid, third running data of the vehicle is obtained. The discharging detection result is determined based on the third running data, and when the discharging detection result indicates that discharging is allowed for the vehicle, the first signal is sent to the BMS.

In an example, a type of a parameter included in the third running data may be the same as a type of a parameter included in the first running data.

S330: Obtain second running data of the vehicle in a process in which the power battery of the vehicle discharges through the discharging connector.

In this embodiment of this application, the VCU may maintain constant monitoring of the electronic control unit (electronic control unit, ECU) of the vehicle based on the various traveling parameters obtained by using the sensing system of the vehicle.

S340: Determine a discharging stop detection result of the vehicle based on the second running data, and send a second signal to the BMS of the vehicle when the discharging stop detection result indicates that discharging is prohibited for the vehicle, where the second signal indicates that discharging is prohibited.

In an example, the second signal indicates that the power battery is prohibited from discharging, and also indicates that the electronic lock is allowed to be driven to be unlocked.

In an example, the second running data includes any one or more of the following: the state of charge of the power battery, the discharging status of the vehicle, the connection confirmation signal, a discharging status of the power battery, and discharging duration of the power battery.

Specifically, when the SOC of the power battery is less than the minimum discharging threshold; when the fault that stops discharging occurs in the vehicle; when the CC signal is invalid; when a third signal sent by the BMS is received, and the third signal indicates that the BMS prohibits discharging; or when the discharging duration of the power battery 22 exceeds preset discharging duration, it is determined that the discharging stop detection result indicates that discharging is prohibited for the vehicle. The preset duration may be set based on the SOC of the power battery and a discharging current of the power battery.

It should be understood that, in a period in which the BMS controls the power battery to discharge, whether discharging is prohibited in a current running status of the vehicle needs to be detected. When the vehicle meets a prohibition condition, the BMS controls the power battery to end discharging and the electronic lock to be unlocked. Therefore, in the discharging process of the power battery, the electronic lock is in the locked state. This can effectively avoid a case in which injuries or component damage is caused because a person draws the discharging connector by mistake. When discharging ends, the electronic lock is controlled to be unlocked, to disconnect the vehicle from the discharging connector, and discharging protection ends. This improves a safety coefficient in the entire discharging process of the vehicle.

In a possible implementation, the VCU may interact with the terminal device and the vehicle-mounted terminal through the gateway, and the user may control the discharging process of the vehicle by using the terminal device.

Specifically, when it is determined that the vehicle-mounted terminal receives a discharging prohibition instruction sent by the terminal device, the second signal is sent to the battery management system.

During actual application, after the second signal is sent to the BMS, the BMS controls the drive unit to drive the electronic lock to be unlocked. If unlocking fails due to a fault of the drive unit, the vehicle enters an emergency unlocking procedure when receiving a first fault signal that indicates an unlocking failure of the electronic lock and that is sent by the drive unit.

In an example, the user may control the electronic lock to be unlocked by using a display panel of the vehicle.

Specifically, when the first fault signal that indicates the unlocking failure of the electronic lock and that is sent by the drive unit is received, a fault signal that indicates the unlocking failure of the electronic lock is sent to the display panel of the vehicle, to control, when an emergency unlocking button is triggered through an operation on a display, the VCU to directly drive the electronic lock to perform emergency unlocking.

In another example, this may be used to control the electronic lock to be unlocked by using the terminal device.

Specifically, when the first fault signal that indicates the unlocking failure of the electronic lock and that is sent by the drive unit is received, a fault signal that indicates the unlocking failure of the electronic lock is sent to the terminal device by using the vehicle-mounted terminal, and when it is determined that the vehicle-mounted terminal receives an emergency unlocking instruction sent by the terminal device, the electronic lock is directly driven to perform emergency unlocking.

During implementation, when a method is executed by the BMS, refer to FIG. 5. A discharging control method of the vehicle may include the following steps.

S510: When the vehicle is connected to a discharging connector, a CC signal of the discharging connector is valid, and a first signal sent by a controller of the vehicle is received, control a drive unit to drive an electronic lock to be locked, and control a power battery of the vehicle to output electric energy to the discharging connector, where the first signal indicates that discharging is allowed.

Specifically, the BMS may interact with the VCU through a gateway and the drive unit, to perform information interaction.

Specifically, validity of the CC signal may be confirmed through interaction between the gateway and the drive unit. During actual application, when the discharging connector is inserted into a discharging port of the vehicle, the vehicle is connected to the discharging connector. The drive unit may obtain the CC signal by using the discharging connector, and the drive unit may determine validity of the CC signal based on a resistance value of the CC signal. When detecting that the CC signal is valid, the drive unit sends, to the BMS by using the gateway, a signal that indicates that the CC signal is valid.

Specifically, the BMS obtains, by using the gateway, the first signal sent by the VCU, and sends a control signal to the drive unit, to control the drive unit to drive the electronic lock to be locked.

In a possible implementation, after the drive unit is controlled to drive the electronic lock to be locked, a status of the electronic lock is detected. When it is determined that the electronic lock fails to be locked, because the electronic lock cannot be locked for discharging safety protection, the power battery may be controlled to stop discharging, and a first fault signal that indicates a locking failure of the electronic lock is sent to the VCU.

In another possible implementation, after it is determined that the electronic lock is successfully locked, the status of the electronic lock continues to be detected. When it is determined that the electronic lock is unlocked, the electronic lock cannot perform protection in a discharging process of the vehicle, and a discharging current of the power battery may be controlled to be less than a preset current. The preset current is less than or equal to a rated current of a load connected to the discharging connector. For example, the rated current of the load connected to the discharging connector is 12 A, and the preset current may be set to 4 A, so that when a person draws the discharging connector by mistake, the discharging current of the power battery does not cause injuries.

S520: In a process in which the power battery discharges through the discharging connector, when a second signal sent by the controller is received, control the power battery to stop discharging, and control the drive unit to drive the electronic lock to be unlocked, where the second signal indicates that discharging is prohibited.

Specifically, the BMS may obtain, by using the gateway, the second signal sent by the VCU, control the power battery to stop discharging, and disconnect the vehicle from the discharging connector through unlocking of the electronic lock, to end the vehicle discharging procedure.

In a possible implementation, before the second signal is received, when a second fault signal that indicates a fault of the drive unit and that is sent by the drive unit is received, to ensure discharging safety of the vehicle, the power battery may be controlled to stop discharging, and the drive unit may be controlled to drive the electronic lock to be unlocked.

In an example, the power battery outputs electric energy to the discharging connector through the drive unit. When it is detected that a voltage, a current, or a power output by the drive unit is inconsistent with an electric parameter output by the power battery, it is determined that the drive unit is faulty.

In another possible implementation, before the second signal is received, a fault status of the power battery is detected. When it is determined that a fault that prohibits discharging occurs in the power battery, to avoid escalation of a fault of the power battery, the power battery may be controlled to stop discharging, and the drive unit is controlled to drive the electronic lock to be unlocked. The fault that prohibits discharging may be a cell short circuit, a cell open circuit, or the like.

During actual application, when the foregoing situation occurs in a component in the vehicle, the drive unit needs to drive the electronic lock to be unlocked, to disconnect the vehicle from the discharging connector and end the discharging procedure of the vehicle. After the drive unit is controlled to drive the electronic lock to be unlocked, the drive unit is controlled to detect the status of the electronic lock. When a third fault signal that indicates an unlocking failure of the electronic lock and that is sent by the drive unit is received, the electronic lock is directly driven for emergency unlocking.

In an example, a user may control the electronic lock to be unlocked by using a display panel of the vehicle.

Specifically, when the first fault signal that indicates the unlocking failure of the electronic lock and that is sent by the drive unit is received, a fault signal that indicates the unlocking failure of the electronic lock is sent to the display panel of the vehicle, so that when an emergency unlocking button is triggered through an operation on a display, the BMS receives the foregoing trigger signal by using the display, and directly drives the electronic lock for emergency unlocking.

In another example, this may be used to control the electronic lock to be unlocked by using a terminal device.

Specifically, when the first fault signal that indicates the unlocking failure of the electronic lock and that is sent by the drive unit is received, a fault signal that indicates the unlocking failure of the electronic lock is sent to the terminal device by using a vehicle-mounted terminal, and when it is determined that the vehicle-mounted terminal receives an emergency unlocking instruction sent by the terminal device, the electronic lock is directly driven for emergency unlocking.

According to the foregoing solution, when the discharging connector is inserted into the discharging port of the vehicle, if the vehicle meets a discharging condition, the BMS may control the electronic lock to be locked, and control the power battery to discharge, so that the vehicle enters the discharging procedure. When the vehicle does not meet a discharging condition, the BMS may control the power battery to stop discharging, and control the electronic lock to be unlocked, and the vehicle ends the discharging procedure. Therefore, in the entire discharging process of the vehicle, the electronic lock is in a locked state. This can effectively avoid a case in which injuries or component damage is caused because a person draws the discharging connector by mistake, thereby improving a safety coefficient in the entire discharging process of the vehicle.

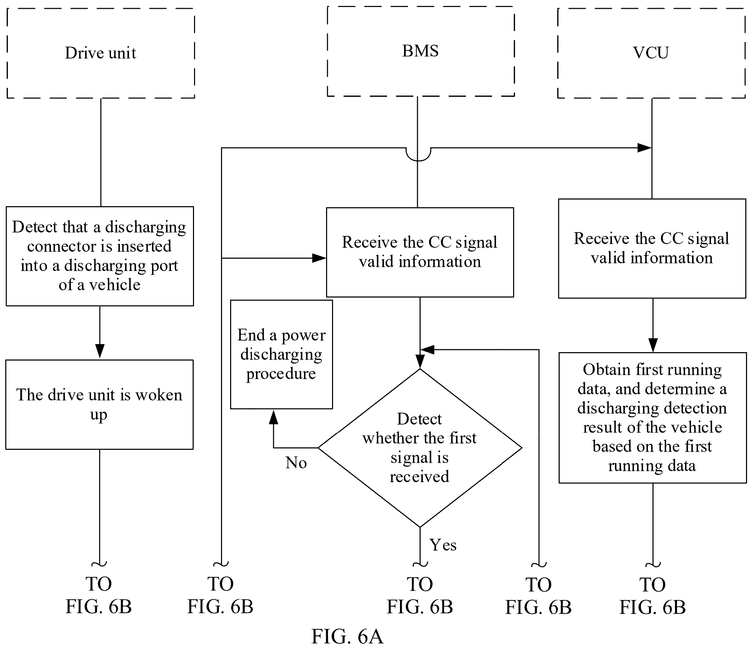

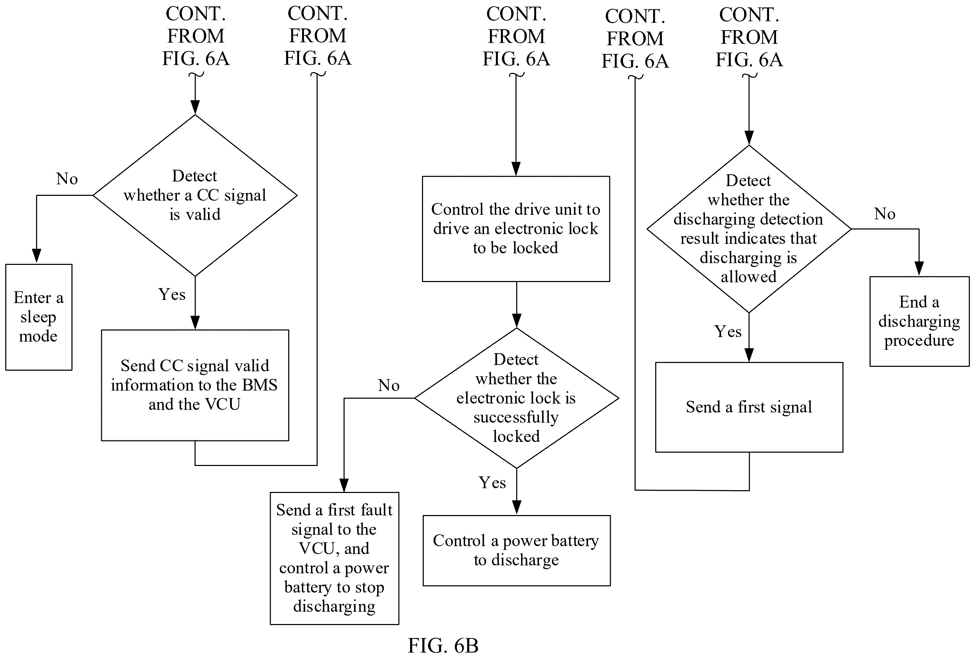

With reference to the foregoing description, a control process in which after the discharging connector is inserted into the discharging port of the vehicle, the electronic lock is controlled to be locked and the power battery is controlled to discharge may be shown in FIG. 6A and FIG. 6B.

Refer to FIG. 6A and FIG. 6B. When the vehicle is inserted into the discharging port of the vehicle, the drive unit is woken up and performs validity detection on the CC signal based on a load resistance value range specified in the Electric Vehicle Conductive Power Supply System Standard, to obtain a validity detection result of the CC signal. When it is determined that the CC signal is valid, CC signal valid information may be sent to the BMS and the VCU, and the vehicle enters a discharging detection procedure.

Refer to FIG. 6A and FIG. 6B. After receiving the information that indicates that the CC signal is valid and that is sent by the drive unit, the VCU may obtain first running data of the vehicle by using a sensor system of the vehicle, and determine a discharging detection result of the vehicle based on the first running data. When the discharging detection result of the vehicle indicates that discharging is allowed, the first signal may be sent to the BMS by using the gateway. If the discharging detection result of the vehicle is that discharging is not allowed, the VCU ends the discharging procedure.

Refer to FIG. 6A and FIG. 6B. When the BMS receives, by using the gateway, the first signal sent by the VCU, it indicates that discharging is currently allowed for the vehicle, and the BMS controls the drive unit to drive the electronic lock to be locked. In addition, after controlling the drive unit to drive the electronic lock to be locked, the BMS detects the status of the electronic lock. After determining that the electronic lock is successfully locked, the BMS controls the power battery to discharge, and the vehicle enters the discharging process. If it is determined that the electronic lock fails to be locked, because the electronic lock cannot perform safety protection in the discharging process, the power battery may be controlled to inform about discharging, and the first fault signal that indicates the locking failure is sent to the VCU.

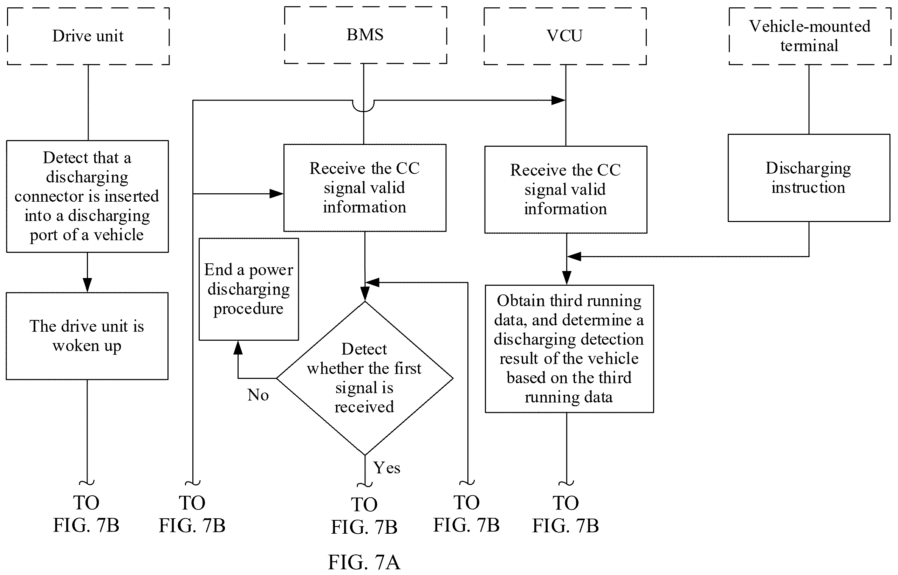

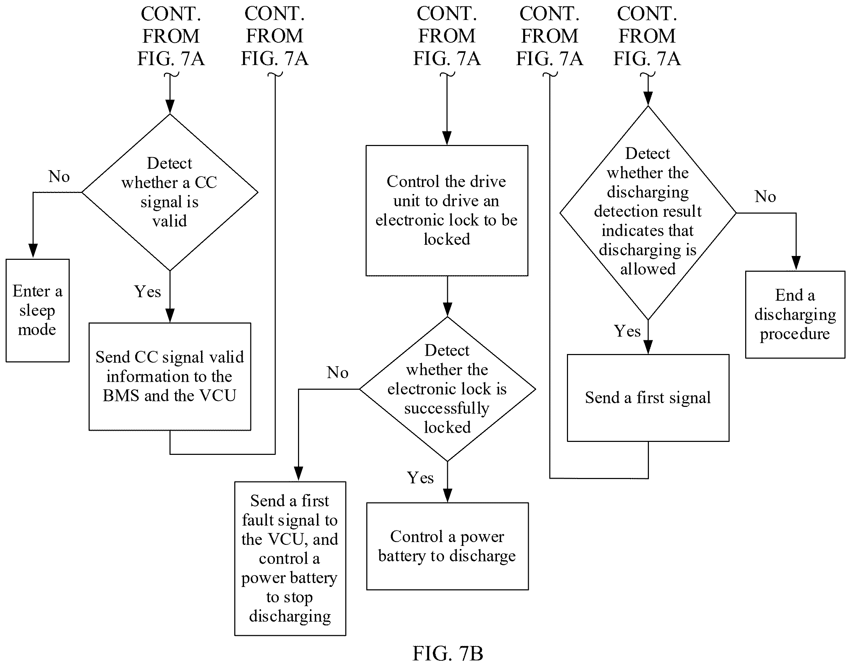

With reference to the foregoing description, the terminal device outside the vehicle may control the discharging process of the vehicle by using the vehicle-mounted terminal in the vehicle. For the discharging process, refer to FIG. 7A and FIG. 7B.

Refer to FIG. 7A and FIG. 7B. After the vehicle-mounted terminal receives a discharging instruction sent by the external terminal device, the vehicle-mounted terminal may send a discharging instruction signal to the VCU by using the gateway. After receiving the foregoing information, the VCU obtains third running information, and controls, based on the information, the vehicle to perform the discharging detection process shown in FIG. 6A and FIG. 6B.

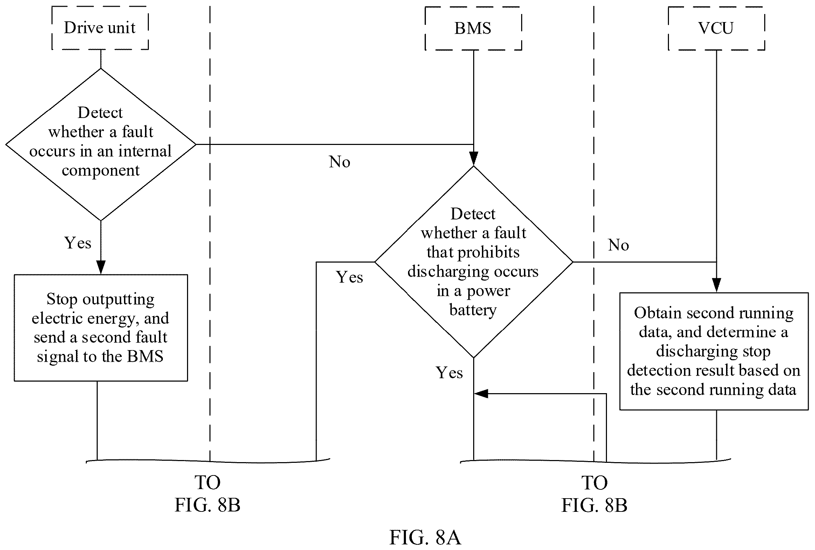

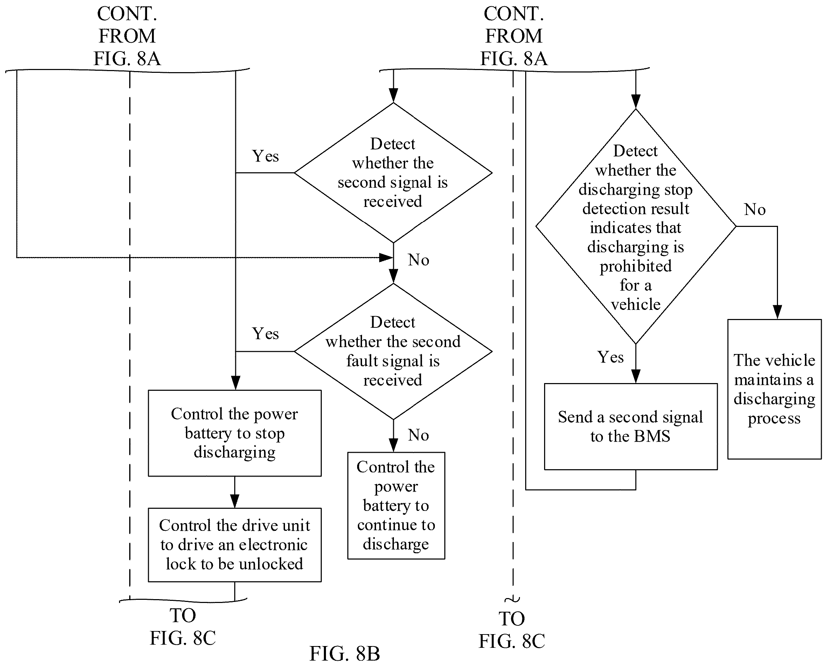

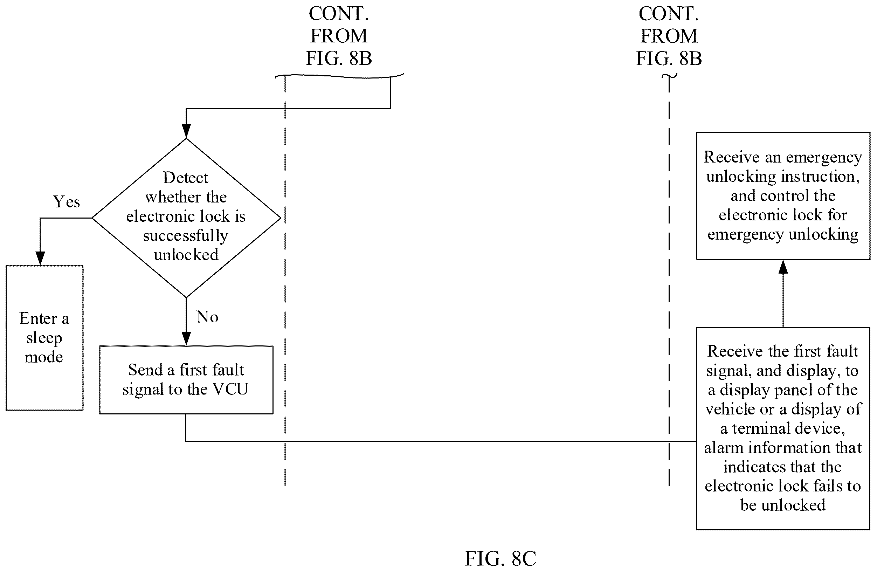

A process in which after the discharging connector is inserted into the discharging port of the vehicle, the power battery is controlled to discharge and the electronic lock is controlled to be locked is described above. For a process in which the power battery is controlled to end discharging and the electronic lock is controlled to be unlocked, refer to FIG. 8A to FIG. 8C.

Refer to FIG. 8A to FIG. 8C. In the discharging process of the power battery, the VCU receives second running data by using the sensor system of the vehicle, detects a current running status of the vehicle based on the second running data, and obtains a discharging stop detection result. When the discharging prohibition detection result of the vehicle is that discharging is prohibited, the VCU may send the second signal to the BMS by using the gateway. If the discharging stop detection result of the vehicle is that discharging is allowed, the VCU controls the vehicle to continue the discharging procedure.

Refer to FIG. 8A to FIG. 8C. In the discharging process of the power battery, the drive unit performs fault self-check. When detecting that a fault occurs in an internal component of the drive unit, the drive unit stops transmitting, to the discharging connector, electric energy output by the power battery, and sends, to the BMS, the second fault signal that indicates the fault in the drive unit.

Refer to FIG. 8A to FIG. 8C. The BMS monitors fault statuses of the power battery and the drive unit. When a fault that prohibits discharging occurring in the power battery is detected, the second fault signal that indicates the fault in the drive unit is received, or the second signal sent by the VCU is received, it indicates that discharging safety cannot be ensured in a current vehicle condition, and the BMS may control the power battery to stop discharging, and control the drive unit to drive the electronic lock to be unlocked. After the drive unit is controlled to drive the electronic lock to be unlocked, the drive unit is controlled to detect whether the electronic lock is successfully unlocked, and when determining that the electronic lock is successfully unlocked, the drive unit may be controlled to sleep. When it is determined that the electronic lock fails to be unlocked, the first fault signal that indicates the unlocking failure of the electronic lock may be sent to the VCU.

After receiving the first fault signal, the VCU displays, by using the display of the vehicle or a display of the terminal device, alarm information that indicates that the electronic lock fails to be unlocked, to notify the user. The user may trigger the emergency unlocking instruction by using the display of the vehicle or the display of the terminal device. After receiving the emergency unlocking instruction, the VCU directly drives the electronic lock for emergency unlocking.

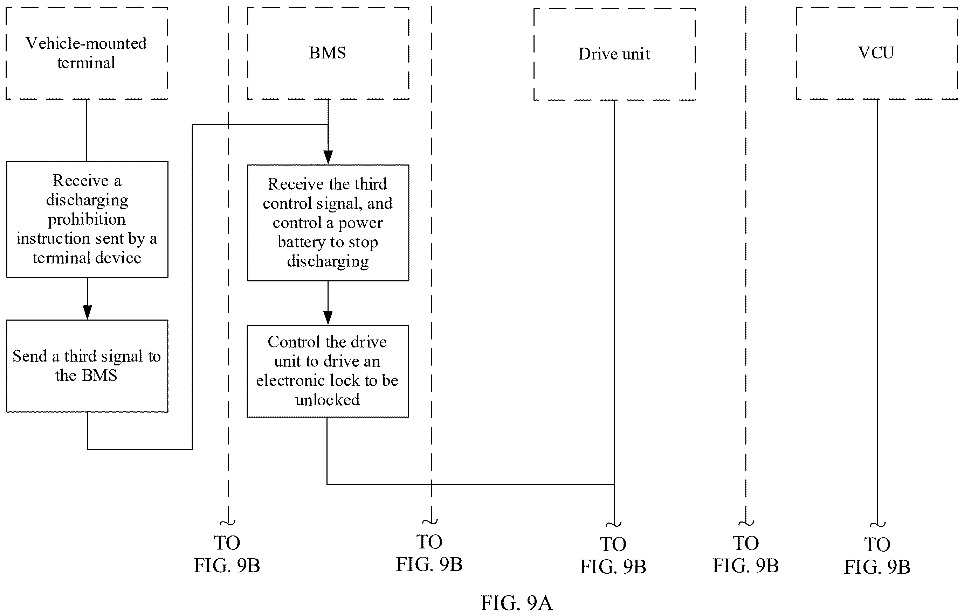

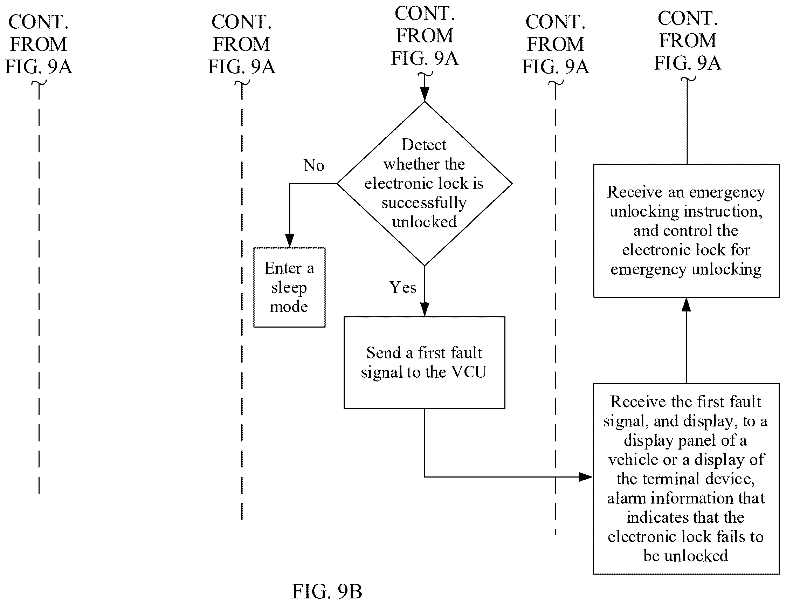

With reference to the foregoing description, the terminal device outside the vehicle may control, by using the vehicle-mounted terminal in the vehicle, the vehicle to end discharging. For the discharging process, refer to FIG. 9A and FIG. 9B.

Refer to FIG. 9A and FIG. 9B. After receiving a discharging prohibition instruction sent by the terminal device, the vehicle-mounted terminal sends a third signal to the BMS. After receiving the third signal, the BMS directly controls the power battery to stop discharging, and controls the drive unit to drive the electronic lock to be unlocked. After controlling the drive unit to drive the electronic lock to be unlocked, the BMS controls the drive unit to detect whether the electronic lock is successfully unlocked. After determining that the electronic lock fails to be unlocked, the BMS sends, to the VCU, the first fault signal that indicates the unlocking failure of the electronic lock. After receiving the first fault signal, the VCU displays, by using the display of the vehicle or the display of the terminal device, the alarm information that indicates that the electronic lock fails to be unlocked, to notify the user. The user may trigger the emergency unlocking instruction by using the display of the vehicle or the display of the terminal device. After receiving the emergency unlocking instruction, the VCU directly drives the electronic lock for emergency unlocking.

In a process of controlling the vehicle discharging procedure to end shown in FIG. 8A to FIG. 8C and FIG. 9A and FIG. 9B, emergency unlocking is performed by using the VCU. During actual application, emergency unlocking may alternatively be performed by using the BMS. Details are not described herein in this application.

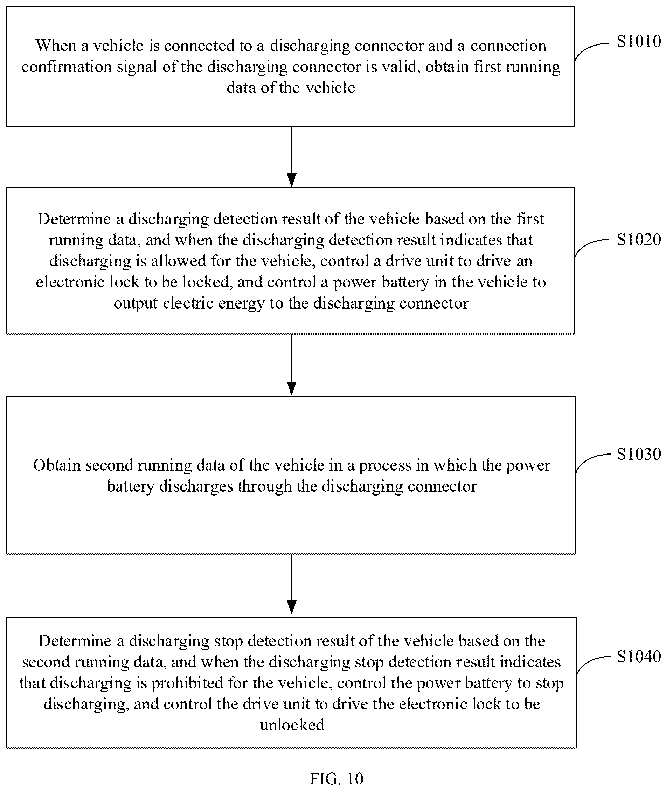

FIG. 10 is a diagram of a principle of another discharging control method according to an embodiment of this application. Refer to FIG. 10. The discharging control solution may be implemented through interaction between a control system in a vehicle and another module in the vehicle. The control system may include one or more controllers.

For example, the control system may obtain at least one traveling parameter of the vehicle by using a sensing system of the vehicle, and maintain constant monitoring and collecting of running data of the vehicle. The sensing system may include but is not limited to: a speed sensor, an acceleration sensor, an angular velocity sensor, an angle of roll sensor, a steering wheel sensor, and another sensor. The at least one traveling parameter obtained by using the sensing system of the vehicle may include but is not limited to: a driving mode, a road mode, a battery state of charge (state of charge, SOC), a speed, a longitudinal (lateral) acceleration, a yaw angular velocity, an angle of roll, a steering wheel angle, a heading angle, acceleration pedal opening degree information, braking pedal opening degree information, a gear shifter position, the driving mode, the road mode, the battery status of charge (state of charge, SOC), and the like. The controller may combine various traveling parameters obtained from the sensing system, to obtain information about the vehicle and a surrounding environment. These pieces of information may be used by a VCU for vehicle control decision. For example, the controller may determine whether the vehicle currently has a discharging safety risk and whether to control the vehicle to enter a discharging procedure, to ensure discharging safety and driving experience of the vehicle.

When controlling the vehicle to enter the discharging procedure, the controller may deliver a control signal by using an in-vehicle communication network (or a gateway) in the vehicle, to control a power battery in the vehicle to output, to a discharging connector, stored electric energy, and control a drive unit to drive an electronic lock to be locked, thereby implementing safety protection in the discharging process of the vehicle, and ensuring discharging safety and driving experience of the vehicle.

In a possible implementation, in a process of controlling the vehicle to discharge, the control system may output, by using the gateway, reminder information to a peripheral device, for example, a touchscreen or a speaker, to indicate a vehicle control decision result to a human driver, so that the human driver learns of a dynamic change of vehicle discharging. The control system may further receive control information from the human driver of the vehicle by using a peripheral device (or by using the gateway), for example, the touchscreen or a microphone. The control information may be associated with the reminder information, and may be used to assist the VCU in vehicle control decision.

During implementation, refer to FIG. 10. The discharging control method of the vehicle may include the following steps.

S1010: When the vehicle is connected to the discharging connector and a connection confirmation signal of the discharging connector is valid, obtain first running data of the vehicle.

Specifically, the control system may interact with the drive unit through the gateway, and obtain CC signal valid information.

S1020: Determine a discharging detection result of the vehicle based on the first running data, and when the discharging detection result indicates that discharging is allowed for the vehicle, control the drive unit to drive the electronic lock to be locked, and control the power battery in the vehicle to output electric energy to the discharging connector.

In this embodiment of this application, the control system may maintain constant monitoring of an electronic control unit (electronic control unit, ECU) of the vehicle and the surrounding environment of the vehicle based on the various traveling parameters obtained by using the sensing system of the vehicle, and determine a scenario in which the vehicle is located and a discharging control function of the vehicle.

After obtaining the first running data, the control system may control on performing discharging detection on the vehicle based on the first running data, to obtain the discharging detection result.

In an example, the first running data includes one or more of the following: a state of charge of the power battery, a running mode of the vehicle, or a discharging status of the vehicle.

Specifically, when the state of charge of the power battery is greater than a minimum discharging threshold; when the running mode of the vehicle is a target mode, and the target mode is a mode other than a fault mode, a detection mode, a maintenance mode, and a trailer mode; or when no fault that stops discharging occurs in the vehicle, it is determined that the discharging detection result indicates that discharging is allowed for the vehicle.

It should be understood that, before the vehicle is formally discharged, whether discharging is allowed in a current running status of the vehicle needs to be first determined. When the vehicle meets a condition for allowing discharging, the power battery is controlled to discharge and the electronic lock is controlled to be locked. Therefore, in a discharging process of the power battery, the electronic lock is in a locked state, and the discharging connector cannot be inserted or drawn. This can effectively avoid a case in which injuries or component damage is caused because a person draws the discharging connector by mistake, thereby improving a safety coefficient in the discharging process of the vehicle.

In a possible implementation, the control system may interact with a terminal device and a vehicle-mounted terminal through the gateway, and a user may control the discharging process of the vehicle by using the terminal device.

Specifically, when it is determined that the vehicle-mounted terminal receives a discharging instruction sent by the terminal device, the vehicle is connected to the discharging connector, and the connection confirmation signal of the discharging connector is valid, third running data of the vehicle is obtained. The discharging detection result is determined based on the third running data, and when the discharging detection result indicates that discharging is allowed for the vehicle, the electronic lock is controlled to be locked, and the power battery is controlled to output electric energy to the discharging connector.

S1030: Obtain second running data of the vehicle in a process in which the power battery discharges through the discharging connector.

In this embodiment of this application, the control system may maintain constant monitoring of the electronic control unit (electronic control unit, ECU) of the vehicle based on the various traveling parameters obtained by using the sensing system of the vehicle.

S1040: Determine a discharging stop detection result of the vehicle based on the second running data, and when the discharging stop detection result indicates that discharging is prohibited for the vehicle, control the power battery to stop discharging, and control the drive unit to drive the electronic lock to be unlocked.

In an example, the second running data includes any one or more of the following: the state of charge of the power battery, the discharging status of the vehicle, the connection confirmation signal, a discharging status of the power battery, and discharging duration of the power battery.

Specifically, when the SOC of the power battery is less than the minimum discharging threshold; when the fault that stops discharging occurs in the vehicle; when the CC signal is invalid; when a third signal sent by the BMS is received, and the third signal indicates that the BMS prohibits discharging; or when the discharging duration of the power battery 22 exceeds preset discharging duration, it is determined that the discharging stop detection result indicates that discharging is prohibited for the vehicle. The preset duration may be set based on the SOC of the power battery and a discharging current of the power battery.

It should be understood that, in a period of controlling the power battery to discharge, whether discharging is prohibited in a current running status of the vehicle needs to be detected. When the vehicle meets a prohibition condition, the power battery is controlled to end discharging and the electronic lock is controlled to be unlocked. Therefore, in the discharging process of the power battery, the electronic lock is in the locked state. This can effectively avoid a case in which injuries or component damage is caused because a person draws the discharging connector by mistake. When discharging ends, the electronic lock is controlled to be unlocked, to disconnect the vehicle from the discharging connector, and discharging protection ends. This improves a safety coefficient in the entire discharging process of the vehicle.

In a possible implementation, the control system may interact with the terminal device and the vehicle-mounted terminal through the gateway, and the user may control the discharging process of the vehicle by using the terminal device.

Specifically, when it is determined that the vehicle-mounted terminal receives a discharging prohibition instruction sent by the terminal device, the drive unit is controlled to drive the electronic lock to be unlocked. If unlocking fails due to a fault of the drive unit, the vehicle enters an emergency unlocking procedure when receiving a first fault signal that indicates an unlocking failure of the electronic lock and that is sent by the drive unit.

In an example, the user may control the electronic lock to be unlocked by using a display panel of the vehicle.

Specifically, when the first fault signal that indicates the unlocking failure of the electronic lock and that is sent by the drive unit is received, a fault signal that indicates the unlocking failure of the electronic lock is sent to the display panel of the vehicle, to control, when an emergency unlocking button is triggered through an operation on a display, the VCU to directly drive the electronic lock for emergency unlocking.

In another example, this may be used to control the electronic lock to be unlocked by using the terminal device.

Specifically, when the first fault signal that indicates the unlocking failure of the electronic lock and that is sent by the drive unit is received, a fault signal that indicates the unlocking failure of the electronic lock is sent to the terminal device by using the vehicle-mounted terminal, and when it is determined that the vehicle-mounted terminal receives an emergency unlocking instruction sent by the terminal device, the electronic lock is directly driven for emergency unlocking.

Embodiments of this application further provide a discharging control apparatus. The vehicle control apparatus may be configured to perform the foregoing method embodiment. For related features, refer to the foregoing method embodiment. Details are not described herein again.

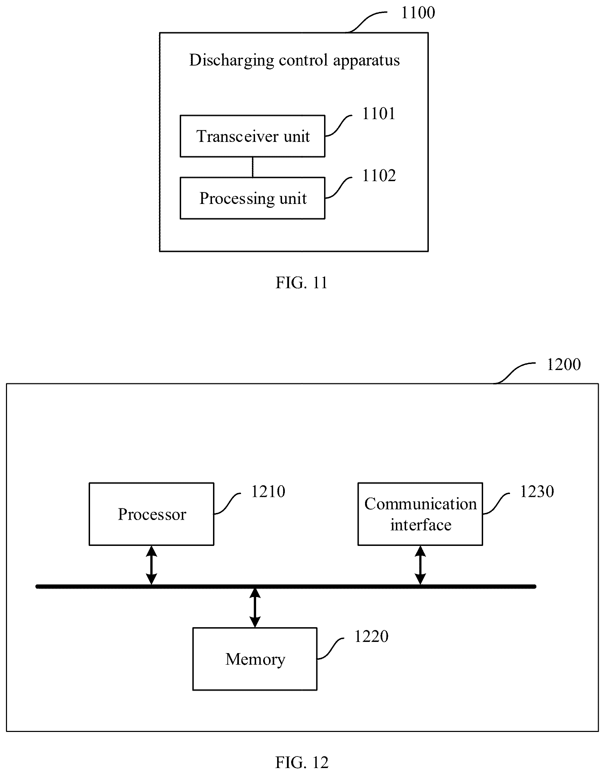

As shown in FIG. 11, in an example, the discharging control apparatus 1100 may include: a transceiver unit 1101, configured to: when a vehicle is connected to a discharging connector and a connection confirmation signal of the discharging connector is valid, obtain first running data of the vehicle; and a processing unit 1102, configured to: determine a discharging detection result of the vehicle based on the first running data, and send a first signal to a battery management system of the vehicle by using the transceiver unit 1101 when the discharging detection result indicates that discharging is allowed for the vehicle, where the first signal indicates that discharging is allowed. The transceiver unit 1101 is further configured to: obtain second running data of the vehicle in a process in which a power battery of the vehicle discharges through the discharging connector. The processing unit 1102 is configured to: determine a discharging stop detection result of the vehicle based on the second running data, and send a second signal to a battery management system of the vehicle by using the transceiver unit when the discharging stop detection result indicates that discharging is prohibited for the vehicle, where the second signal indicates that discharging is prohibited.

In a possible implementation, the first running data includes one or more of the following: a state of charge of the power battery, a running mode of the vehicle, or a discharging status of the vehicle.

In a possible implementation, the processing unit 1102 is specifically configured to: when the state of charge of the power battery is greater than a minimum discharging threshold; when the running mode of the vehicle is a target mode, and the target mode is a mode other than a fault mode, a detection mode, a maintenance mode, and a trailer mode; or when no fault that stops discharging occurs in the vehicle, determine that the discharging detection result indicates that discharging is allowed for the vehicle.

In a possible implementation, the second running data includes one or more of the following: the state of charge of the power battery, the discharging status of the vehicle, the connection confirmation signal, a discharging status of the power battery, and discharging duration of the power battery.

In a possible implementation, the processing unit 1102 is specifically configured to: when the state of charge of the power battery is less than the minimum discharging threshold; when the fault that stops discharging occurs in the vehicle; when the connection confirmation signal is invalid; when a third signal sent by the BMS is received, and the third signal indicates that discharging is prohibited; or when the discharging duration of the power battery exceeds preset discharging duration, determine that the discharging stop detection result indicates that discharging is prohibited for the vehicle.

In a possible implementation, the processing unit 1102 is further configured to: obtain third running data of the vehicle by using the transceiver unit when determining that a vehicle-mounted terminal receives a discharging instruction sent by a terminal device, the vehicle is connected to the discharging connector, and the connection confirmation signal of the discharging connector is valid; and determine the discharging detection result based on the third running data, and send the first signal to the battery management system by using the transceiver unit 1101 when the discharging detection result indicates that discharging is allowed for the vehicle.

In a possible implementation, the processing unit 1102 is further configured to: when determining that the vehicle-mounted terminal receives a discharging prohibition instruction sent by the terminal device, send the second signal to the battery management system by using the transceiver unit 1101.

In a possible implementation, the processing unit 1102 is further configured to: when receiving a first fault signal that indicates an unlocking failure of the electronic lock and that is sent by a drive unit, directly drive the electronic lock for emergency unlocking, where the drive unit is configured to drive the electronic lock to be locked or unlocked.

In a possible implementation, the processing unit 1102 is further configured to: when determining that the vehicle-mounted terminal receives an emergency unlocking instruction sent by the terminal device, directly drive the electronic lock for emergency unlocking.

In a possible implementation, the processing unit 1102 is specifically configured to: send the first signal and the second signal by using the transceiver unit 1101, where the first signal indicates that discharging is allowed and that the electronic lock is allowed to be locked, and the second signal indicates that discharging is prohibited and that the electronic lock is allowed to be unlocked.

For a specific implementation, refer to the method steps implemented by the vehicle control apparatus in the foregoing method embodiment. Details are not described herein again.

Embodiments of this application further provide a discharging control apparatus. The vehicle control apparatus may be configured to perform the foregoing method embodiment. For related features, refer to the foregoing method embodiment. Details are not described herein again.

As shown in FIG. 11, in an example, the discharging control apparatus 1100 may include a transceiver unit 1101 and a processing unit 1102. The processing unit 1102 is configured to: when a vehicle is connected to a discharging connector, a connection confirmation signal of the discharging connector is valid, and it is determined that the transceiver unit 1101 receives a first signal sent by a controller of the vehicle, control a drive unit to drive an electronic lock to be locked, and control a power battery of the vehicle to output electric energy to the discharging connector, where the first signal indicates that discharging is allowed; and in a process in which the power battery discharges through the discharging connector, when it is determined that the transceiver unit 1101 receives a second signal sent by the controller, control the power battery to stop discharging, and control the drive unit to drive the electronic lock to be unlocked, where the second signal indicates that discharging is prohibited.

In a possible implementation, the processing unit 1102 is further configured to: after controlling the drive unit to drive the electronic lock to be locked, detect a status of the electronic lock; and when determining that the electronic lock fails to be locked, control the power battery to stop discharging, and send, to the controller by using the transceiver unit 1101, a first fault signal that indicates a locking failure of the electronic lock.

In a possible implementation, the transceiver unit 1101 is further configured to receive the connection confirmation signal sent by the drive unit.

In a possible implementation, the processing unit 1102 is further configured to: detect the status of the electronic lock in the process in which the power battery discharges through the discharging connector; and when determining that the electronic lock is unlocked, control a discharging current of the power battery to be less than a preset current, where the preset current is less than or equal to a rated current of a load connected to the discharging connector.

In a possible implementation, the processing unit 1102 is further configured to: in the process in which the power battery discharges through the discharging connector, when receiving, by using the transceiver unit 1101, a second fault signal that indicates a fault of the drive unit and that is sent by the drive unit, control the power battery to stop discharging, and control the drive unit to drive the electronic lock to be unlocked.

In a possible implementation, the processing unit 1102 is further configured to: in the process in which the power battery discharges through the discharging connector, detect a fault status of the power battery, and when determining that a fault that prohibits discharging occurs in the power battery, control the power battery to stop discharging, and control the drive unit to drive the electronic lock to be unlocked.

In a possible implementation, the processing unit 1102 is further configured to: after controlling the drive unit to drive the electronic lock to be unlocked, control the drive unit to detect the status of the electronic lock; and when receiving, by using the transceiver unit 1101, a third fault signal that indicates an unlocking failure of the electronic lock and that is sent by the drive unit, directly drive the electronic lock for emergency unlocking.

In a possible implementation, the processing unit 1102 is further configured to: when determining that a vehicle-mounted terminal receives an emergency unlocking instruction sent by a terminal device, directly drive the electronic lock for emergency unlocking.

For a specific implementation, refer to the method steps implemented by the vehicle control apparatus in the foregoing method embodiment. Details are not described herein again.

Embodiments of this application further provide a discharging control apparatus. The vehicle control apparatus may be configured to perform the foregoing method embodiment. For related features, refer to the foregoing method embodiment. Details are not described herein again.

As shown in FIG. 11, in an example, the discharging control apparatus 1100 may include a transceiver unit 1101 and a processing unit 1102. The transceiver unit 1101 is configured to: when a vehicle is connected to a discharging connector and a connection confirmation signal of the discharging connector is valid, obtain first running data of the vehicle. The processing unit 1102 is configured to: determine a discharging detection result of the vehicle based on the first running data; and when the discharging detection result indicates that discharging is allowed for the vehicle, control a drive unit to drive an electronic lock to be locked, and control a power battery in the vehicle to output electric energy to the discharging connector, where the drive unit is configured to drive the electronic lock to be locked or unlocked. In addition, the transceiver unit 1101 is further configured to: obtain second running data of the vehicle in a process in which the power battery discharges through the discharging connector. The processing unit 1102 is further configured to: determine a discharging stop detection result of the vehicle based on the second running data; and when the discharging stop detection result indicates that discharging is prohibited for the vehicle, control the power battery to discharge, and control the drive unit to drive the electronic lock to be unlocked.

In a possible implementation, the transceiver unit 1101 is further configured to: obtain third running data of the vehicle when determining that a vehicle-mounted terminal receives a discharging instruction sent by a terminal device, the vehicle is connected to the discharging connector, and the connection confirmation signal of the discharging connector is valid. The processing unit 1102 is further configured to: determine the discharging detection result based on the third running data, and when the discharging detection result indicates that discharging is allowed for the vehicle, control the drive unit to drive the electronic lock to be locked.

In a possible implementation, the processing unit 1102 is further configured to: when determining that the vehicle-mounted terminal receives a discharging prohibition instruction sent by the terminal device, control the drive unit to drive the electronic lock to be unlocked.

In a possible implementation, the processing unit 1102 is further configured to: when determining that the transceiver unit receives a first fault signal that indicates an unlocking failure of the electronic lock and that is sent by the drive unit, directly drive the electronic lock for emergency unlocking.

In a possible implementation, the processing unit 1102 is further configured to: when determining that the vehicle-mounted terminal receives an emergency unlocking instruction sent by the terminal device, directly drive the electronic lock for emergency unlocking.

It should be understood that division of units in the apparatus is merely logical function division. During actual implementation, all or some of the units may be integrated into one physical entity or may be physically separated. In addition, the unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of units in the apparatus. For example, the processor is a general-purpose processor, for example, a central processing unit (Central Processing Unit, CPU) or a microprocessor, and the memory is a memory inside the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (Field Programmable Gate Array, FPGA) is used as an example. The field programmable gate array may include a large quantity of logic gate circuits, and a connection relationship between the logic gate circuits is configured by using a configuration file, to implement the functions of some or all of the foregoing units. All units of the foregoing apparatuses may be implemented in a form of software invoked by the processor, or all units may be implemented in a form of hardware circuit, or some units may be implemented in a form of software invoked by the processor, and a remaining part may be implemented in a form of hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated together and implemented in a form of system-on-a-chip (system-on-a-chip, SoC). The SoC may include at least one processor, configured to implement any one of the methods or implement functions of the units of the apparatus. Types of the at least one processor may be different, for example, the at least one processor includes a CPU and an FPGA, a CPU and an artificial intelligence processor, a CPU and a GPU, and the like.

In a simple embodiment, a person skilled in the art may figure out that the discharging control apparatus in the foregoing embodiment may be in a form shown in FIG. 12.

An apparatus 1200 shown in FIG. 12 includes at least one processor 1210 and a communication interface 1230. In an optional design, the apparatus may further include a memory 1220.

A specific connection medium between the processor 1210 and the memory 1220 is not limited in embodiments of this application.

In the apparatus shown in FIG. 12, when communicating with another device, the processor 1210 may perform data transmission by using the communication interface 1230.

When the charging control apparatus uses the form shown in FIG. 12, the processor 1210 in FIG. 12 may invoke computer-executable instructions stored in the memory 1220, so that the apparatus 1200 can perform any one of the foregoing method embodiments.

Embodiments of this application further relate to a charging control system. The charging control system may include a first execution unit and a second execution unit. The first execution unit may perform the method on the VCU side in the foregoing embodiment, and the second execution unit is configured to perform the method on the BMS side in the foregoing embodiment.

Embodiments of this application further relate to a vehicle. The vehicle includes a first battery and the charging control apparatus. The charging control apparatus may perform the method according to any one of the foregoing embodiments.

In a possible implementation, embodiments of this application provide a computer-readable storage medium. The computer-readable storage medium stores program code. When the program code is run on a computer, the computer is enabled to perform the foregoing method embodiments.

In a possible implementation, embodiments of this application provide a computer program product. When the computer program product is run on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims of this application and their equivalent technologies. In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

## Claims

1. A discharging control method, comprising:
when a vehicle is connected to a discharging connector and a connection confirmation signal of the discharging connector is valid, obtaining first running data of the vehicle; and
determining a discharging detection result of the vehicle based on the first running data, and sending a first signal to a battery management system of the vehicle when the discharging detection result indicates that discharging is allowed for the vehicle, wherein the first signal indicates that discharging is allowed; or
obtaining second running data of the vehicle in a process in which a power battery of the vehicle discharges through the discharging connector; and
determining a discharging stop detection result of the vehicle based on the second running data, and sending a second signal to a battery management system of the vehicle when the discharging stop detection result indicates that discharging is prohibited for the vehicle, wherein the second signal indicates that discharging is prohibited.

2. The method according to claim 1, wherein the first running data comprises one or more of the following: a state of charge of the power battery, a running mode of the vehicle, or a discharging status of the vehicle.

3. The method according to claim 2, wherein the determining a discharging detection result of the vehicle based on the first running data comprises:
when the state of charge of the power battery is greater than a minimum discharging threshold;
when the running mode of the vehicle is a target mode, and the target mode is a mode other than a fault mode, a detection mode, a maintenance mode, and a trailer mode; or
when no fault that stops discharging occurs in the vehicle,
determining that the discharging detection result indicates that discharging is allowed for the vehicle.

4. The method according to any one of claims 1 to 3, wherein the second running data comprises one or more of the following: the state of charge of the power battery, the discharging status of the vehicle, the connection confirmation signal, a discharging status of the power battery, and discharging duration of the power battery.

5. The method according to claim 4, wherein the determining a discharging stop detection result of the vehicle based on the second running data comprises:
when the state of charge of the power battery is less than the minimum discharging threshold;
when the fault that stops discharging occurs in the vehicle;
when the connection confirmation signal is invalid;
when a third signal sent by the battery management system is received, and the third signal indicates that discharging is prohibited; or
when the discharging duration of the power battery exceeds preset discharging duration, determining that the discharging stop detection result indicates that discharging is prohibited for the vehicle.

6. The method according to any one of claims 1 to 5, wherein the method further comprises:
obtaining third running data of the vehicle when determining that a vehicle-mounted terminal receives a discharging instruction sent by a terminal device, the vehicle is connected to the discharging connector, and the connection confirmation signal of the discharging connector is valid; and
determining the discharging detection result based on the third running data, and sending the first signal to the battery management system when the discharging detection result indicates that discharging is allowed for the vehicle.

7. The method according to any one of claims 1 to 6, wherein the method further comprises: when determining that the vehicle-mounted terminal receives a discharging prohibition instruction sent by the terminal device, sending the second signal to the battery management system.

8. The method according to any one of claims 1 to 7, wherein the method further comprises:
when receiving a first fault signal that indicates an unlocking failure of an electronic lock and that is sent by a drive unit, directly driving the electronic lock to perform emergency unlocking, wherein the drive unit is configured to drive the electronic lock to be locked or unlocked.

9. The method according to any one of claims 1 to 8, wherein the method further comprises: when determining that the vehicle-mounted terminal receives an emergency unlocking instruction sent by the terminal device, directly driving the electronic lock to perform emergency unlocking.

10. The method according to any one of claims 1 to 9, wherein that the first signal indicates that discharging is allowed comprises:
the first signal indicates that discharging is allowed and that the electronic lock is allowed to be locked; and
that the second signal indicates that discharging is prohibited comprises:
the second signal indicates that discharging is prohibited and that the electronic lock is allowed to be unlocked.

11. A discharging control method, comprising:
when a vehicle is connected to a discharging connector, a connection confirmation signal of the discharging connector is valid, and a first signal sent by a controller of the vehicle is received, controlling a drive unit to drive an electronic lock to be locked, and controlling a power battery of the vehicle to output electric energy to the discharging connector, wherein the first signal indicates that discharging is allowed; or
in a process in which the power battery discharges through the discharging connector, when a second signal sent by the controller is received, controlling the power battery to stop discharging, and controlling the drive unit to drive the electronic lock to be unlocked, wherein the second signal indicates that discharging is prohibited.

12. The method according to claim 11, wherein the method further comprises: after controlling the drive unit to drive the electronic lock to be locked, detecting a status of the electronic lock; and when determining that the electronic lock fails to be locked, controlling the power battery to stop discharging, and sending, to the controller, a first fault signal that indicates a locking failure of the electronic lock.

13. The method according to claim 11 or 12, wherein the method further comprises: receiving the connection confirmation signal sent by the drive unit.

14. The method according to any one of claims 11 to 13, wherein the method further comprises:
detecting the status of the electronic lock in the process in which the power battery discharges through the discharging connector; and
when determining that the electronic lock is unlocked, controlling a discharging current of the power battery to be less than a preset current, wherein the preset current is less than or equal to a rated current of a load connected to the discharging connector.

15. The method according to any one of claims 11 to 14, wherein the method further comprises:
in the process in which the power battery discharges through the discharging connector, when receiving a second fault signal that indicates a fault of the drive unit and that is sent by the drive unit, controlling the power battery to stop discharging, and controlling the drive unit to drive the electronic lock to be unlocked.

16. The method according to any one of claims 11 to 15, wherein the method further comprises: in the process in which the power battery discharges through the discharging connector, detecting a fault status of the power battery, and when determining that a fault that prohibits discharging occurs in the power battery, controlling the power battery to stop discharging, and controlling the drive unit to drive the electronic lock to be unlocked.

17. The method according to any one of claims 11 to 16, wherein the method further comprises:
after controlling the drive unit to drive the electronic lock to be unlocked, controlling the drive unit to detect the status of the electronic lock; and
when receiving a third fault signal that indicates an unlocking failure of the electronic lock and that is sent by the drive unit, directly driving the electronic lock to perform emergency unlocking.

18. The method according to any one of claims 11 to 17, wherein the method further comprises: when determining that a vehicle-mounted terminal receives an emergency unlocking instruction sent by a terminal device, directly driving the electronic lock to perform emergency unlocking.

19. A discharging control method, comprising:
when a vehicle is connected to a discharging connector and a connection confirmation signal of the discharging connector is valid, obtaining first running data of the vehicle; and
determining a discharging detection result of the vehicle based on the first running data; and when the discharging detection result indicates that discharging is allowed for the vehicle, controlling a drive unit to drive an electronic lock to be locked, wherein the drive unit is configured to drive the electronic lock to be locked or unlocked, and controlling a power battery in the vehicle to output electric energy to the discharging connector; or
obtaining second running data of the vehicle in a process in which the power battery discharges through the discharging connector; and
determining a discharging stop detection result of the vehicle based on the second running data; and when the discharging stop detection result indicates that discharging is prohibited for the vehicle, controlling the power battery to stop discharging, and controlling the drive unit to drive the electronic lock to be unlocked.

20. The method according to claim 19, wherein the method further comprises:
obtaining third running data of the vehicle when determining that a vehicle-mounted terminal receives a discharging instruction sent by a terminal device, the vehicle is connected to the discharging connector, and the connection confirmation signal of the discharging connector is valid; and
determining the discharging detection result based on the third running data, and when the discharging detection result indicates that discharging is allowed for the vehicle, controlling the drive unit to drive the electronic lock to be locked.

21. The method according to claim 19 or 20, wherein the method further comprises: when determining that the vehicle-mounted terminal receives a discharging prohibition instruction sent by the terminal device, controlling the drive unit to drive the electronic lock to be unlocked.

22. The method according to any one of claims 19 to 21, wherein the method further comprises:
when receiving a first fault signal that indicates an unlocking failure of the electronic lock and that is sent by the drive unit, directly driving the electronic lock for emergency unlocking.

23. The method according to any one of claims 19 to 22, wherein the method further comprises: when determining that the vehicle-mounted terminal receives an emergency unlocking instruction sent by the terminal device, directly driving the electronic lock for emergency unlocking.

24. A discharging control apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 10.

25. A discharging control apparatus, comprising at least one processor, wherein the at least one processor is coupled to at least one memory, and the at least one processor is configured to execute a computer program or instructions stored in the at least one memory, to enable the apparatus to perform the method according to any one of claims 11 to 18.

26. A discharging control apparatus, comprising at least one processor, wherein the at least one processor is coupled to at least one memory, and the at least one processor is configured to execute a computer program or instructions stored in the at least one memory, to enable the apparatus to perform the method according to any one of claims 19 to 23.

27. A discharging control system, comprising a first execution unit and a second execution unit, wherein the first execution unit is configured to perform the method according to any one of claims 1 to 10, and the second execution unit is configured to perform the method according to any one of claims 11 to 18.

28. A vehicle, comprising a power battery and the discharging control apparatus according to claim 24 or 25.

29. A computer-readable storage medium, comprising a computer program or instructions, wherein when a computer reads and executes the computer program or the instructions, the computer is enabled to perform the method according to any one of claims 1 to 10, or perform the method according to any one of claims 11 to 18, or perform the method according to any one of claims 19 to 23.

30. A computer storage product, wherein when the computer program product is run on a computer, the computer is enabled to perform the method according to any one of claims 1 to 10, or perform the method according to any one of claims 11 to 18, or perform the method according to any one of claims 19 to 23.
